# EUROPEAN PATENT APPLICATION

(11) **EP 4 117 241 A1**
(43) Date of publication of application: **11.01.2023**
(21) Application number: 21779328.0
(22) Date of filing: 31.03.2021
(51) Int. Cl.: H04L 12/721, H04L 12/723, H04L 12/725

(54) **SERVICE EXECUTION METHOD, APPARATUS AND SYSTEM, AND STORAGE MEDIUM**

(30) Priority: 03.04.2020 CN 202010261329; 22.05.2020 CN 202010443123
(71) Applicant: Huawei Technologies Co., Ltd., Shenzhen, Guangdong 518129, (CN)
(72) Inventor: LI, Cheng, Shenzhen, Guangdong 518129 (CN); HU, Ruizhao, Shenzhen, Guangdong 518129 (CN)
(74) Representative: Epping - Hermann - Fischer
(86) International application number: PCT/CN2021/084777
(87) International publication number: WO 2021/197397

(57) **Abstract**

This application discloses a service execution method and apparatus, a system, and a storage medium, and pertains to the communications field. The method includes: A first network device generates a first packet, where the first packet includes an SRH, the SRH includes a service identifier, and the service identifier is related to first service information and second service information. The first network device sends the first packet to a second network device, where the service identifier indicates the second network device to execute at least one service based on the first service information, the second service information, and the first packet. In this application, a problem that a network service cannot be provided for an actual service packet in an SRv6 network can be resolved.

## Description

This application claims priority to Chinese Patent Application No. 202010261329.9, filed with the China National Intellectual Property Administration on April 3, 2020 and entitled "PACKET PROCESSING METHOD AND APPARATUS, AND SYSTEM", which is incorporated herein by reference in its entirety. This application claims priority to Chinese Patent Application No. 202010443123.8, filed with the China National Intellectual Property Administration on May 22, 2020 and entitled "SERVICE EXECUTION METHOD AND APPARATUS, AND SYSTEM", which is incorporated herein by reference in its entirety.

### TECHNICAL FIELD

This application relates to the communications field, and in particular, to a service execution method and apparatus, a system, and a storage medium.

### BACKGROUND

Segment routing (segment routing, SR) is a protocol designed based on an idea of source routing to control forwarding of a data packet in a network. SR is used to divide the network into segments, allocate segment identifiers to the segments or nodes in the network, and use a data packet to carry sequentially arranged segment identifiers, so that the data packet can be transmitted through a forwarding path indicated by the segment identifiers. In an SR network, an ingress device in the segment routing network inserts a group of ordered segment identifiers into a data packet to explicitly specify a forwarding path of the data packet. The ingress device may also be referred to as a head node. When SR is applied to an internet protocol version 6 (Internet Protocol Version 6, IPv6) data plane, SR is referred to as segment routing over IPv6 (SRv6).

A problem of explicitly indicating the forwarding path of the packet is resolved by using the SRv6 technology. However, when an SRv6 network further needs to perform some processing or provide some services based on the packet, for example, analyze performance of a network through which the SRv6 network forwards the packet, a solution in which a simulated packet is generated and data related to the service is carried in the simulated packet is usually used to implement network performance measurement. However, this solution cannot provide a network service for an actual service packet.

### SUMMARY

This application provides a service execution method and apparatus, a system, and a storage medium, to resolve a problem that a network service cannot be provided for an actual service packet in an SRv6 network.

According to a first aspect, this application provides a packet processing method, applied to a segment routing SR network. The method includes: A first network device generates a first packet, where the first packet includes a segment routing header SRH, the SRH includes a service identifier, and the service identifier is related to first service information and second service information. The first network device sends the first packet to a second network device, where the service identifier indicates the second network device to execute at least one service based on the first service information, the second service information, and the first packet.

In the method, because the first packet includes the service identifier, and the service identifier is related to the first service information and the second service information, the second network device executes the at least one service based on the first service information, the second service information, and the first packet. The first packet is an actual service packet, and the service is executed based on the first service information, the second service information, and the first packet, so that a network service can be provided for an actual service. In addition, because the service identifier is related to at least two pieces of information corresponding to the at least one service, the first packet needs to include only the service identifier. Therefore, a length of the first packet is reduced, time required by the second network device to parse the first packet is reduced, and packet forwarding or service processing efficiency is increased. In a possible implementation, the first service information includes a first service, the second service information includes a second service, and the at least one service includes the first service and the second service.

The service identifier indicates two services, so that the second network device can execute at least the two services based on the service identifier. This reduces a length of the first packet, and increases efficiency of parsing the first packet by the second network device and a speed of executing the service by the second network device.

In a possible implementation, the first service information includes a first feature identifier required for executing the at least one service, the second service information includes a second feature identifier required for executing the at least one service, and the feature identifier includes a traffic identifier or a network identifier.

One service identifier includes two feature identifiers, so that the second network device can obtain at least the two feature identifiers based on the service identifier. This reduces a length of the first packet, and increases efficiency of parsing the first packet by the second network device and a speed of executing the service by the second network device.

In a possible implementation, the first service information includes a first service, the second service information includes a first feature identifier required for executing the at least one service, the feature identifier herein includes a traffic identifier or a network identifier, and the at least one service includes the first service.

One service identifier includes at least one feature identifier and indicates one service, so that the second network device can obtain at least one feature identifier and one service based on the service identifier. This reduces a length of the first packet, and increases efficiency of parsing the first packet by the second network device and a speed of executing the service by the second network device.

In a possible implementation, when the first service information includes the first service, and the second service information includes the second service, the service identifier includes a service indication, where the service indication indicates the first service and the second service. A service indication part of the service identifier carries service indication information, so that an information carrying rate of the service identifier can be further improved, a length of the SRH of the first packet can be reduced, and efficiency of parsing the first packet by the second device can be increased.

In a possible implementation, the service identifier further includes a service parameter, and the service parameter is related to the first service or the second service. The service identifier carries service parameter information, so that an information carrying rate of the service identifier can be further improved, a length of the SRH of the first packet can be reduced, and efficiency of parsing the first packet by the second device can be increased.

In a possible implementation, when the first service information includes the first feature identifier required for executing the at least one service, and the second service information includes the second feature identifier required for executing the at least one service, the service identifier includes a feature indication, where the feature indication part indicates that the service identifier includes the first feature identifier and the second feature identifier. The service identifier carries the feature indication, and types of the first feature identifier and the second feature identifier may be determined by using the feature indication, so that an information carrying rate of the service identifier can be further improved, a length of the SRH of the first packet can be reduced, and efficiency of parsing the SRH of the first packet by the second device can be increased.

In a possible implementation, the service identifier includes at least two feature identifiers, for example, the first feature identifier and the second feature identifier, and a sequence of these feature identifiers corresponds to the feature indication information. In this way, the second network device sequentially obtains the feature identifiers based on the indication information, to increase efficiency of obtaining the feature identifier.

In a possible implementation, when the first service information includes the first service, and the second service information includes the first feature identifier required for executing the at least one service, the service identifier includes a service indication and a feature indication, where the service indication indicates the first service, and the feature indication indicates that the service identifier includes the first feature identifier. A service indication part of the service identifier indicates service information, and a feature indication part of the service identifier indicates a feature identifier, so that an information carrying rate of the service identifier can be further improved, a length of the SRH of the first packet can be reduced, and efficiency of parsing the SRH of the first packet by the second device can be increased. Alternatively, the service identifier includes a feature service indication, where the feature service indication indicates the first service and indicates that the service identifier includes the first feature identifier. One piece of indication information simultaneously indicates a plurality of pieces of information, so that an information carrying rate of the service identifier can be further improved, a length of the SRH of the first packet can be reduced, and efficiency of parsing the SRH of the first packet by the second device can be increased.

In a possible implementation, the service identifier further includes a service parameter, and the service parameter is related to the first service. The service identifier carries service parameter information, so that an information carrying rate of the service identifier can be further improved, a length of the SRH of the first packet can be reduced, and efficiency of parsing the first packet by the second device can be increased.

In a possible implementation, a sequence of parameter information in the service identifier corresponds to the service indication. In this way, the second network device sequentially obtains parameter information of processing services based on the service indication, to increase obtaining efficiency.

In a possible implementation, the service identifier is located in a segment identifier list in the SRH or located in a type-length-value TLV in the SRH. Because the service identifier is located in the segment identifier list, the service identifier is a segment identifier in the segment identifier list, to reduce a length of the first packet. In addition, the second network device does not need to traverse TLVs to obtain the service identifier, to increase processing efficiency of the second network device. Alternatively, because the service identifier is located in one TLV, a length of the first packet is reduced. In addition, the second network device does not need to spend a lot of time parsing the TLV in the first packet, to increase efficiency of parsing the first packet.

In a possible implementation, when the service identifier is located in the segment identifier list, the service identifier is located at the beginning of the segment identifier list, at the end of the segment identifier list, or before the end of the segment identifier list and is adjacent to the end of the segment identifier list. The service identifier is carried at a determined location in the segment identifier list, so that the second network device does not need to obtain a location of the service identifier, but directly obtains the service identifier at a default location, to increase processing efficiency. In addition, when the service identifier is placed at the beginning or the end, a procedure of forwarding performed based on a segment identifier list in an existing SR network is not affected. This facilitates an implementation of this solution. Placing the service identifier before the end helps the second network device obtain the service identifier before the entire segment identifier list is removed. This improves availability and reliability of this solution.

In a possible implementation, a flag in the SRH is used to indicate that the SRH includes the service identifier. The service identifier is indicated by using a flag, so that the second network device does not need to obtain a service identifier from each packet when receiving the packet, but only needs to obtain the service identifier under the indication of the flag. This can reduce processing pressure of the second network device.

In a possible implementation, a length of the service identifier is 128 bits. The service identifier is defined in a manner of having a length the same as that of a segment identifier in the SR network, so that usability of this technical solution is higher.

In a possible implementation, the feature indication and the service indication occupy 16 bits in 128 bits, and the 16 bits occupy high-order bits or low-order bits in the 128 bits. The indication information is carried together, and occupies the high-order bits or the low-order bits in the 128 bits, so that the second network device obtains, starting from the high-order bits or the low-order bits, various types of information related to the service identifier, to help increase processing efficiency of the second network device.

In a possible implementation, at least one processing service includes the first service, and the first service includes one processing operation or an operation sequence including a plurality of processing operations.

In a possible implementation, a service type corresponding to the at least one processing service includes one or more of internet protocol flow performance measurement IPFPM, light in-band operation, administration, and maintenance light IOAM, security encryption, a service used to add a timestamp, a service function chain SFC, and a forwarding and access control list.

In a possible implementation, before the first network device generates the first packet, the first network device receives a second packet, and obtains the service identifier based on the second packet; and generates the first packet based on the second packet, where the SRH of the first packet includes the service identifier.

In a possible implementation, the first network device determines a service type set and/or a feature type set based on the second packet, where the service type set includes a service type of each of at least one processing service, and the feature type set includes a feature type of each of at least one feature identifier. The first network device obtains the service identifier based on the service type set and/or the feature identifier feature type set.

According to a second aspect, this application provides a service execution method, applied to a segment routing SR network. In the method, a second network device receives a first packet, where the first packet includes a segment routing header SRH, the SRH includes a service identifier, the service identifier includes indication information, and the service identifier is related to first service information and second service information. The second network device executes at least one service based on the first service information, the second service information, and the first packet. In the method, because the first packet includes the service identifier, and the service identifier is related to the first service information and the second service information, the second network device can execute the at least one service based on the first service information, the second service information, and the first packet. The first packet is an actual service packet, and the first packet is implemented based on the service identifier, to provide a network service for an actual service. In addition, because the service identifier includes at least two pieces of information corresponding to the at least one service, the first packet needs to include only the service identifier. Therefore, a length of the first packet is reduced, time required by the second network device to parse the first packet is reduced, and packet forwarding or service processing efficiency is increased.

In a possible implementation, the first service information includes a first service, the second service information includes a second service, and the at least one service includes the first service and the second service. The service identifier indicates two services, so that the second network device can execute at least the two services based on the service identifier. This reduces a length of the first packet, and increases efficiency of parsing the first packet by the second network device and a speed of executing the service by the second network device.

In a possible implementation, the first service information includes a first feature identifier required for executing the at least one service, the second service information includes a second feature identifier required for executing the at least one service, and the feature identifier includes a traffic identifier or a network identifier. One service identifier includes two feature identifiers, so that the second network device can obtain at least the two feature identifiers based on the service identifier. This reduces a length of the first packet, and increases efficiency of parsing the first packet by the second network device and a speed of executing the service by the second network device.

In a possible implementation, the first service information includes a first service, the second service information includes a first feature identifier required for executing the at least one service, the feature identifier herein includes a traffic identifier or a network identifier, and the at least one service includes the first service. One service identifier includes at least one feature identifier and indicates one service, so that the second network device can obtain at least one feature identifier and one service based on the service identifier. This reduces a length of the first packet, and increases efficiency of parsing the first packet by the second network device and a speed of executing the service by the second network device.

In a possible implementation, when the first service information includes the first service, and the second service information includes the second service, the service identifier includes a service indication. That the second network device executes at least one service based on the first service information, the second service information, and the first packet includes: The second network device determines the first service and the second service based on the service indication. The second network device executes the first service and the second service based on the first packet. A service indication part of the service identifier carries service indication information, so that an information carrying rate of the service identifier can be further improved, a length of the SRH of the first packet can be reduced, and efficiency of parsing the first packet by the second device can be increased.

In a possible implementation, the service identifier further includes a service parameter, and the service parameter is related to the first service; and the method includes: The second network device executes the first service based on the service parameter. The service identifier carries service parameter information, so that an information carrying rate of the service identifier can be further improved, a length of the SRH of the first packet can be reduced, and efficiency of parsing the first packet by the second device can be increased.

In a possible implementation, when the first service information includes the first feature identifier required for executing the at least one service, and the second service information includes the second feature identifier required for executing the at least one service, the service identifier includes a feature indication, where the feature indication indicates that the service identifier includes the first feature identifier and the second feature identifier. That the second network device executes at least one service based on the first service information, the second service information, and the first packet includes: The second network device obtains the first feature identifier and the second feature identifier based on the feature indication.

In a possible implementation, the service identifier includes at least two feature identifiers, for example, the first feature identifier and the second feature identifier, and a sequence of these feature identifiers corresponds to the feature indication information. In this way, the second network device sequentially obtains the feature identifiers based on the indication information, to increase efficiency of obtaining the feature identifier.

In a possible implementation, when the first service information includes the first service, and the second service information includes the first feature identifier required for executing the at least one service, the service identifier includes a service indication and a feature indication, where the service indication indicates the first service, and the feature indication indicates that the service identifier includes the first feature identifier. That the second network device executes at least one service based on the first service information, the second service indication, and the first packet includes: The second network device determines the first service based on the service indication. The second network device determines the first feature identifier based on the feature indication. The second network device executes the at least one service based on the first packet and the first feature identifier, where the at least one service includes the first service. A service indication part of the service identifier indicates service information, and a feature indication part of the service identifier indicates a feature identifier, so that an information carrying rate of the service identifier can be further improved, a length of the SRH of the first packet can be reduced, and efficiency of parsing the SRH of the first packet by the second device can be increased.

In a possible implementation, when the first service information includes the first service, and the second service information includes the first feature identifier required for executing the at least one service, the service identifier includes a feature service indication, where the feature service indication indicates the first service and indicates that the service identifier includes the first feature identifier. That the second network device executes at least one service based on the first service information, the second service information, and the first packet includes: The second network device determines the first service and the first feature identifier based on the feature service indication. The second network device executes the at least one service based on the first packet and the first feature identifier, where the at least one service includes the first service. A feature service indication part of the service identifier indicates service information and a feature identifier, so that an information carrying rate of the service identifier can be further improved, a length of the SRH of the first packet can be reduced, and efficiency of parsing the SRH of the first packet by the second device can be increased.

In a possible implementation, the service identifier further includes a service parameter part, and the service parameter part is related to the first service. That the first network device executes the at least one service based on the first packet and the first feature identifier includes: The second network device executes the first service based on the service parameter. In a manner in which the service identifier includes parameter information, the second network device sequentially obtains parameter information of processing services based on the service indication, to increase obtaining efficiency.

In a possible implementation, the service identifier is located in a segment identifier list in the SRH or located in a type-length-value TLV in the SRH. Because the service identifier is located in the segment identifier list, the service identifier is a segment identifier in the segment identifier list, to reduce a length of the first packet. In addition, the second network device does not need to traverse TLVs to obtain the service identifier, to increase processing efficiency of the second network device. Alternatively, because the service identifier is located in one TLV, a length of the first packet is reduced. In addition, the second network device does not need to spend a lot of time parsing the TLV in the first packet, to increase efficiency of parsing the first packet.

In a possible implementation, when the service identifier is located in the segment identifier list, the service identifier is located at the beginning of the segment identifier list, at the end of the segment identifier list, or before the end of the segment identifier list and is adjacent to the end of the segment identifier list. The service identifier is carried at a determined location in the segment identifier list, so that the second network device does not need to obtain a location of the service identifier, but directly obtains the service identifier at a default location, to increase processing efficiency. In addition, when the service identifier is placed at the beginning or the end, a procedure of forwarding performed based on a segment identifier list in an existing SR network is not affected. This facilitates an implementation of this solution. Placing the service identifier before the end helps the second network device obtain the service identifier before the entire segment identifier list is removed. This improves availability and reliability of this solution.

In a possible implementation, a flag in the SRH is used to indicate that the SRH includes the service identifier, and the second network device obtains the service identifier from the SRH based on the flag. The service identifier is indicated by using a flag, so that the second network device does not need to obtain a service identifier from each packet when receiving the packet, but only needs to obtain the service identifier under the indication of the flag. This can reduce processing pressure of the second network device.

In a possible implementation, a length of the service identifier is 128 bits. The service identifier is defined in a manner of having a length the same as that of a segment identifier in the SR network, so that usability of this technical solution is higher.

In a possible implementation, the feature indication and the service indication occupy 16 bits in 128 bits, and the 16 bits occupy high-order bits or low-order bits in the 128 bits. The indication information is carried together, and occupies the high-order bits or the low-order bits in the 128 bits, so that the second network device obtains, starting from the high-order bits or the low-order bits, various types of information related to the service identifier, to help increase processing efficiency of the second network device.

In a possible implementation, at least one processing service includes the first service, and the first service includes one processing operation or an operation sequence including a plurality of processing operations.

In a possible implementation, a service type corresponding to the at least one processing service includes one or more of internet protocol flow performance measurement IPFPM, light in-band operation, administration, and maintenance light IOAM, security encryption, a service used to add a timestamp, a service function chain SFC, and a forwarding and access control list.

According to a third aspect, this application provides a service execution apparatus. The apparatus has functions of implementing the service execution method according to any one of the first aspect or the possible designs of the first aspect. Specifically, the apparatus includes units configured to perform the method according to any one of the first aspect or the possible implementations of the first aspect. For specific details of the apparatus according to the third aspect, refer to any one of the first aspect or the optional manners of the first aspect. The details are not described herein again.

According to a fourth aspect, this application provides a service execution apparatus. The apparatus has functions of implementing the service execution method according to any one of the second aspect or the possible designs of the second aspect. Specifically, the apparatus includes units configured to perform the method according to any one of the second aspect or the possible implementations of the second aspect. For specific details of the apparatus according to the fourth aspect, refer to any one of the second aspect or the optional manners of the second aspect. The details are not described herein again.

According to a fifth aspect, this application provides a packet processing apparatus. The apparatus includes at least one processor, and the at least one processor is coupled to at least one memory. The processor and the memory may be connected through a bus system. The memory is configured to store one or more programs, and the processor is configured to execute the one or more programs in the memory, so that the apparatus completes the method according to any one of the first aspect or the possible implementations of the first aspect.

According to a sixth aspect, this application provides a service execution apparatus. The apparatus includes at least one processor, and the at least one processor is coupled to at least one memory. The processor and the memory may be connected through a bus system. The memory is configured to store one or more programs, and the processor is configured to execute the one or more programs in the memory, so that the apparatus completes the method according to any one of the second aspect or the possible implementations of the second aspect.

According to a seventh aspect, this application provides a computer-readable storage medium. The computer-readable storage medium stores program code. When the program code is run on a computer, the computer is enabled to perform the method according to any one of the first aspect, the second aspect, the possible implementations of the first aspect, or the possible implementations of the second aspect.

According to an eighth aspect, this application provides a computer program product including program code. When the computer program product runs on a computer, the computer is enabled to perform the method according to any one of the first aspect, the second aspect, the possible implementations of the first aspect, or the possible implementations of the second aspect.

According to a ninth aspect, this application provides a chip, including a storage device and a processing device. The storage device is configured to store computer instructions, and the processing device is configured to: invoke the computer instructions from the storage device and run the computer instructions, to perform the method according to any one of the first aspect, the second aspect, the possible implementations of the first aspect, or the possible implementations of the second aspect.

According to a tenth aspect, this application provides a network system. The network system includes a first network device and a second network device, the first network device may be the apparatus according to the third aspect or the apparatus according to the fifth aspect, and the second network device may be the apparatus according to the fourth aspect or the apparatus according to the sixth aspect.

### BRIEF DESCRIPTION OF DRAWINGS

FIG. 1 is a schematic diagram of an architecture of an SR network according to an embodiment of this application;
FIG. 2 is a flowchart of a packet processing method according to an embodiment of this application;
FIG. 3 is a schematic diagram of a structure of a service identifier according to an embodiment of this application;
FIG. 4 is a schematic diagram of a structure of another service identifier according to an embodiment of this application;
FIG. 5 is a schematic diagram of a structure of another service identifier according to an embodiment of this application;
FIG. 6 is a schematic diagram of a structure of another service identifier according to an embodiment of this application;
FIG. 7 is a schematic diagram of a structure of a segment routing header (segment routing header, SRH) according to an embodiment of this application;
FIG. 8 is a schematic diagram of a structure of another SRH according to an embodiment of this application;
FIG. 9 is a schematic diagram of a structure of another SRH according to an embodiment of this application;
FIG. 10 is a schematic diagram of a structure of a service execution apparatus according to an embodiment of this application;
FIG. 11 is a schematic diagram of a structure of another service execution apparatus according to an embodiment of this application;
FIG. 12 is a schematic diagram of a structure of another service execution apparatus according to an embodiment of this application;
FIG. 13 is a schematic diagram of a structure of another service execution apparatus according to an embodiment of this application; and
FIG. 14 is a schematic diagram of a structure of a network system according to an embodiment of this application.

### DESCRIPTION OF EMBODIMENTS

To make the objectives, technical solutions, and advantages of this application clearer, the following further describes the implementations of this application in detail with reference to the accompanying drawings.

In this application, terms such as "first" and "second" are used to distinguish between same items or similar items that have basically same functions. It should be understood that there is no logical or time sequence dependency between "first", "second", and "n^{th}", and an execution sequence is not limited. It should be further understood that although the terms such as "first" and "second" are used in the following descriptions to describe various elements, these elements should not be limited by the terms. These terms are merely used to distinguish one element from another element. For example, without departing from the scope of the various examples, first service information may be referred to as second service information, and similarly, second service information may be referred to as first service information. Terms in this application are explained below.

SRH: An internet protocol version 6 (internet protocol version 6, IPv6) packet includes an IPv6 standard header, an IPv6 extension header (0, ..., and n), and a payload (Payload). To implement SRv6 based on an IPv6 forwarding plane, an IPv6 extension header, referred to as an SRH extension header, is newly added. The extension header specifies an IPv6 path and stores a plurality of IPv6 SIDs. The plurality of SIDs may form a segment identifier list (Segment List). A head node adds one or more SRH extension headers to a packet, so that an intermediate node can forward the IPv6 packet based on path information included in the SRH extension header.

Service identifier: The service identifier is an identifier added by a head node in a segment routing network to a transmitted packet, indicates some or all services that need to be executed, based on the packet, by a network device that transmits the packet and information related to some or all services that need to be executed, and may include a feature identifier, a service parameter, or other information required for executing a service.

Feature identifier: The feature identifier includes a traffic identifier or a network identifier.

Traffic identifier: The traffic identifier is an identifier of a traffic feature of a transmitted packet. The traffic identifier includes any identifier, such as a flow identifier (Flow ID), an application identifier (App ID), or a 5-tuple, that can identify the traffic feature of the packet.

Network identifier: The network identifier is an identifier of a network feature related to packet transmission. The network identifier includes any identifier, such as a path identifier (Path ID) or a slice identifier, that can identify a network feature used to transmit a packet.

Feature indication: A service identifier may include a feature indication. When the feature indication is included, the feature indication indicates one or more pieces of feature identifier information carried in the service identifier, and may further indicate one or more feature types of the one or more feature identifiers.

Service indication: A service identifier may include a service indication. When the service indication is included, the service indication indicates one or more services, and these services may be referred to as service types. When the service types further need to carry parameter information, the service identifier may further include at least one service parameter corresponding to one or more service types.

Feature service indication: A service identifier may include a feature service indication, and the feature service indication includes both a function of the foregoing service indication and a function of the foregoing feature indication. To be specific, when the service identifier includes the feature service indication, the feature service indication indicates one or more services and indicates one or more pieces of feature identifier information carried in the service identifier, and may further indicate one or more feature types of the one or more feature identifiers. When these service types further need to carry parameter information, the service identifier may further include at least one service parameter corresponding to one or more service types.

Service information: The service information may be information such as a service type, a parameter required by a service, or a feature identifier required by a service.

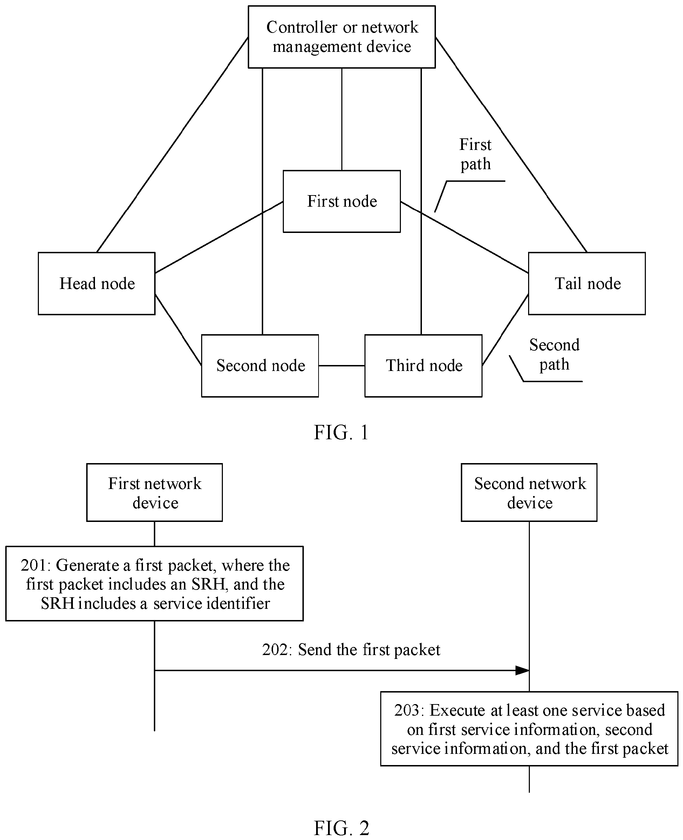

The following describes an example of an application scenario of this application. FIG. 1 is a schematic diagram of an SRv6 network according to an embodiment of this application.

The SRv6 network includes a head node and a tail node, and at least one path may be established between the head node and the tail node.

For any path between the head node and the tail node, the path further includes at least one other node between the head node and the tail node. For ease of description, the another node between the head node and the tail node is referred to as an intermediate node.

For example, a first path and a second path shown in FIG. 1 are paths between the head node and the tail node, the first path further includes a first node between the head node and the tail node, the second path further includes a second node and a third node between the head node and the tail node, and the first node, the second node, and the third node are intermediate nodes.

In a related technology, the SRv6 network not only transmits a packet, but also provides a corresponding service for the packet or a service corresponding to the packet, for example, determines network performance of a forwarding path for transmitting the packet. The head node may forward the packet based on the first path or the second path. When an administrator of the SRv6 network needs to determine network performance of the first path or the second path for forwarding the packet, the administrator may generate a simulation packet, and use the simulation packet to carry a service requirement related to the service and various related parameters. The information is used to measure performance of the network forwarding path. However, in this solution, actual performance of actual service traffic cannot be measured when network performance is measured by using the simulation packet. Further, in a related technology, when a same service requires a plurality of pieces of information, or when a plurality of services need to be provided for a same packet, related content may be carried in a plurality of TLVs of an SRH. However, in this solution, a plurality of pieces of related information need to be carried in the plurality of TLVs. As a result, a device in a network needs to traverse the TLVs to obtain related information, and processing efficiency is low. The plurality of pieces of information include at least two pieces of information.

An embodiment of this application provides a solution to the foregoing problem. In a manner of using an SRH of a service packet to carry an indication service and service-related information, network performance measurement based on an actual service packet is implemented.

In addition, the technical solutions provided in embodiments of this application may be further applied to an application scenario in which an SRv6 provides another service or a plurality of other application scenarios, for example, known or future-oriented application scenarios such as security encryption, internet protocol flow performance measurement (internet protocol flow performance measurement, IPFPM), light in-band operation, administration, and maintenance (light in-band operation, administration, and maintenance, Light IOAM), security encryption, a service used to add a timestamp, a service function chain (service function chain, SFC), and a forwarding or access control list (ACL).

In this embodiment of this application, the head node is referred to as a first network device. To enable the tail node and/or the intermediate node to execute at least one service based on a packet sent by the first network device, the first network device generates a first packet, where the first packet includes an SRH, the SRH includes a service identifier, and the service identifier includes first service information and second service information.

The first network device sends the first packet to a second network device (a tail node or an intermediate node on one of the at least one path) through the path. The second network device receives the first packet, and executes the at least one service based on the first service information, the second service information, and the first packet.

Optionally, the at least one service includes one service, two services, or more services, the first service information includes a first feature identifier, and the second service information includes a second feature identifier. The first feature identifier and the second feature identifier may be used to execute a same service, or may be used to execute different services.

Optionally, the at least one service includes at least a first service, the first service information may be used to indicate the first service, and the second service information includes the first feature identifier. The first feature identifier may be an identifier required for executing the first service, or may be an identifier required for executing a second service. The second service may be a second service determined by the intermediate node or the tail node after the intermediate node or the tail node receives the service identifier.

The feature identifier includes a traffic identifier or a network identifier. For explanations of the traffic identifier or the network identifier, refer to the foregoing descriptions. Details are not described herein again.

A detailed implementation process in which the first network device generates the first packet and a detailed implementation process in which the second network device processes the first packet are described in detail in the following embodiment shown in FIG. 2.

Optionally, refer to FIG. 1. The SR network further includes a controller and/or a network management device. The controller or the network management device is responsible for controlling or managing a node in the SR network. Optionally, the controller or the network management device may configure packets of network traffic for which a head node, a tail node, and/or an intermediate node in the SR network provide/provides a service.

Optionally, the head node device is responsible for generating a service identifier.

In an example, the controller or the network management device may send a first configuration policy to the head node, where the first configuration policy includes a traffic identifier, and a service type set and/or a feature type set. The first configuration policy is used to indicate the head node to generate the service identifier based on information in the service type set and/or the feature type set after receiving a packet that conforms to the traffic identifier in the configuration policy. The service type set and/or the feature type set included in the first configuration policy are/is a set of to-be-executed or to-be-processed information of the packet corresponding to the traffic identifier. A first packet is generated based on the service identifier and the packet. Usually, the received packet is used as a payload (payload) part of the first packet. A detailed process in which the head node generates the first packet is described in detail in the following embodiment shown in FIG. 2. Details are not described herein.

Optionally, the head node does not generate the service identifier, but obtains a service identifier delivered by the controller or the network device. In other words, the service identifier may be generated by the controller or the network device.

Optionally, after being generated by the intermediate node or the tail node in the network, the service identifier may be released to the controller or the network device in a form of an advertisement, a path computation element communication protocol (path computation element communication protocol, PCEP), or the like, and then released to the head node; or released by the intermediate node/tail node to the head node.

Optionally, before the head node generates the service identifier, the head node further obtains a second configuration policy, where the second configuration policy includes a corresponding rule for generating the service identifier based on the service type set and/or the feature type set. The head node may generate the service identifier according to the rule in the second configuration policy.

Optionally, the head node receives the second configuration policy sent by the controller or the network management device, or receives the second configuration policy sent by the intermediate node or the tail node, or generates the second configuration policy.

Optionally, when generating the second configuration policy, the head node further sends the second configuration policy to the tail node.

Optionally, when generating the second configuration policy, the head node further sends the second configuration policy to the intermediate node.

Optionally, the head node does not need to obtain the second configuration policy, but has the corresponding rule information by default. For example, the head node is configured to have the corresponding rule information before delivery.

Optionally, other related devices in the SR network, for example, the intermediate node and/or the tail node, may also obtain the second configuration policy, so that when receiving a packet including the service identifier, these related devices may parse the service identifier according to the corresponding rule, to perform a function such as a service indicated by the service identifier. A detailed process in which the intermediate node or the tail node processes the packet based on the service identifier is described in detail in the following embodiment shown in FIG. 2. Details are not described herein.

Optionally, the tail node receives the second configuration policy sent by the controller or the network management device, or receives the second configuration policy sent by the intermediate node or the head node, or generates the second configuration policy.

Optionally, when generating the second configuration policy, the tail node further sends the second configuration policy to the head node.

Optionally, when generating the second configuration policy, the tail node further sends the second configuration policy to the intermediate node.

Optionally, the intermediate node receives the second configuration policy sent by the controller or the network management device, or receives the second configuration policy sent by the head node or the tail node, or generates the second configuration policy.

Optionally, when generating the second configuration policy, the intermediate node further sends the second configuration policy to the head node and the tail node.

Optionally, the intermediate node or the tail node in the SR network does not need to obtain the second configuration policy, but has the corresponding rule information by default. For example, the intermediate node or the tail node is configured to have the corresponding rule information before delivery.

Optionally, the first configuration policy further includes parameter information of each of x processing services, at least one processing service includes the x processing services, and x is an integer greater than 0.

Optionally, the controller or the network management device further sends a start command to the tail node, where the start command includes the service type set. The start command is used to configure the tail node to be capable of starting a processing service corresponding to each service type in the service type set, so that when receiving the first packet, the tail node can process the first packet based on the started processing service.

Optionally, the controller or the network management device further sends the start command to the intermediate node, where the start command is further used to configure the intermediate node to be capable of starting a processing service corresponding to each service type in the service type set, so that when receiving the first packet, the intermediate node can process the first packet based on the started processing service.

Optionally, the traffic identifier is 4-tuple information, 5-tuple information, or the like of a packet. The 4-tuple information of the packet includes a source address, a destination address, a source port number, and a destination port number of the packet. The 5-tuple information of the packet includes a protocol type, a source address, a destination address, a source port number, and a destination port number of the packet.

Optionally, any one of the at least one processing service includes one processing operation or an operation sequence including a plurality of processing operations.

Optionally, a service type in the service type set includes one or more of IPFPM, light IOAM, security encryption, a service used to add a timestamp, an SFC, and a forwarding and access control list (access control list, ACL). For example, the service type set is a set including IPFPM, or the service type set is a set including IPFPM+light IOAM, or the service type set is a set including IPFPM+security encryption, or the service type set is a set including IPFPM+light IOAM+SFC. Details are not listed one by one herein.

Optionally, at least one feature identifier includes a traffic feature identifier and/or a network feature identifier, a feature type of the traffic feature identifier includes one or more of a flow identifier (Flow ID) and an application identifier (Application identifier, App ID), and a feature type of the network feature identifier includes one or more of a path identifier (Path ID), a slice identifier, and the like.

Optionally, when the feature type of the traffic feature identifier includes Flow ID, the feature type of the traffic feature identifier further includes a sequence number (sequence number, Seq Num).

The following uses an example to describe the first configuration policy. Refer to FIG. 1. It is assumed that the controller sends the first configuration policy to the head node, and the first configuration policy includes 4-tuple information, a service type set, a feature type set, and parameter information. The 4-tuple information includes a source address IP 1, a source port number P1, a destination address IP 2, and a destination port number P2, for example, is (IP 1, IP 2, P1, P2) for short. The service type set includes IPFPM. The feature type set includes Path ID. The parameter information includes a packet loss rate and a delay. A processing service corresponding to IPFPM is a performance measurement service, and the performance measurement service is used to monitor performance of network traffic. The first configuration policy is used to indicate the head node in the SR network to generate, after receiving a packet whose packet feature meets the 4-tuple information (IP 1, IP 2, P1, P2), a service identifier in a manner in which IPFPM needs to be performed on the packet and Path ID needs to be carried, and generate a first packet based on the service identifier and the received packet, that is, use the first packet to carry the service identifier. For an example of the second configuration policy, refer to Table 1, Table 2, Table 3, or Table 4 in FIG. 2 and related descriptions. Details are not described herein.

Refer to FIG. 2. An embodiment of this application provides a packet processing method. The method may be applied to the architecture of the SR network shown in FIG. 1, and includes the following steps.

S201: A first network device generates a first packet, where the first packet includes an SRH, and the SRH includes a service identifier.

The service identifier is related to first service information and second service information.

Optionally, the first service information includes a first service, the second service information includes a second service, and the foregoing at least one service includes the first service and the second service. The first service information and the second service information herein may indicate the first service and the second service by using a service indication included in the service identifier.

Optionally, the first service information includes a first feature identifier, and the second service information includes a second feature identifier. The first service information and the second service information herein are carried in the service identifier. In addition, the service identifier further includes a feature indication, and the feature indication part indicates the first feature identifier and the second feature identifier.

Optionally, the first service information includes the first service, and the second service information includes the first feature identifier. The first service information herein is indicated by using a service indication included in the service identifier, and the service indication part may further indicate more services. The service identifier further includes a feature indication indicating the first feature identifier, and the feature indication may also indicate more feature identifiers.

Optionally, the first service information includes the first service, and the second service information includes the first feature identifier. The service identifier includes a feature service indication, and the feature service indication may indicate both the first service and the first feature identifier. To be specific, in this case, the first service information includes the first service, and the second service information includes the first feature identifier required for executing the at least one service.

That is, when the first service information and the second service information include a service (or a service type), the service identifier includes a service indication part or a feature service indication part, where the service indication indicates at least one to-be-executed service, for example, the first service or the second service described above, and the feature service indication indicates at least one service to be executed based on the first packet, for example, the first service described above.

When the first service information and the second service information include a feature identifier, the service identifier includes a feature indication part or a feature service indication part, where the feature indication part indicates that the service identifier includes the feature identifier, for example, the first feature identifier and/or the second feature identifier.

The feature identifier includes a traffic identifier or a network identifier. For explanations of the traffic identifier or the network identifier, refer to the foregoing descriptions. Details are not described herein again.

Optionally, in this step, the first network device generates the first packet in the following operations 2011 to 2013. The operations 2011 to 2013 are respectively as follows:
S2011: The first network device receives a second packet, and obtains a first configuration policy corresponding to network traffic to which the second packet belongs.

The first configuration policy includes a traffic identifier of the network traffic to which the second packet belongs. The traffic identifier is 4-tuple information or 5-tuple information in the second packet. In S2011, the first network device receives the second packet, obtains, from the second packet, the traffic identifier of the network traffic to which the second packet belongs, and queries, from a stored first policy configuration, whether the first configuration policy including the traffic identifier exists. If the first configuration policy including the traffic identifier exists, the first network device obtains the first configuration policy including the traffic identifier, to obtain the first configuration policy corresponding to the network traffic to which the second packet belongs.

S2012: The first network device obtains the service identifier based on a service type set and/or a feature type set included in the first configuration policy.

In this operation, the first network device generates the service identifier based on the service type set and/or the feature type set included in the first configuration policy.

The generated service identifier has the following four possible cases: Case 1: The service identifier includes a service indication. Case 2: The service identifier includes a feature indication and a feature identifier. Case 3: The service identifier includes a feature indication, a feature identifier, and a service indication. Case 4: The service identifier includes a feature service indication and a feature identifier. When the first configuration policy includes the service type set, the obtained service identifier includes the service indication, that is, the service identifier in Case 1 is obtained. When the first configuration policy includes the feature type set, the obtained indication information includes the feature indication, that is, the service identifier in Case 2 is obtained. When the first configuration policy includes the service type set and the feature type set, the obtained service identifier includes the service indication, the feature indication, and the feature identifier, or the obtained service identifier includes the feature service indication, that is, the service identifier in Case 3 or Case 4 is obtained.

Manners of generating the service identifier in the four cases are respectively described one by one.

### Case 1: The service identifier includes the service indication.

The first configuration policy includes a service type set. The first network device obtains a corresponding service indication from the first correspondence based on the service type set included in the first configuration policy, that is, the service indication corresponds to the service type set. The service indication may indicate one or more service types, that is, a type corresponding to the first service or the second service. The first correspondence is used to store a correspondence between a service type set, parameter information, and a generation rule of content in a corresponding service indication. That is, the second configuration policy may include the first correspondence herein. The service indication may be represented in a bitmap form or a numeric form.

Any record in the first correspondence includes a service type set and a generation rule of content in a service indication corresponding to the service type set.

For example, for details, refer to a first correspondence shown in Table 1.

The first correspondence is an example of a rule correspondence for generating a service indication based on a bitmap. As shown in Table 1, a first record in the correspondence indicates that when a zero^{th} bit in the service indication is set to a special value, for example, 1, it indicates that an IPFPM service needs to be provided, and the service further includes a service parameter, that is, color bit information, where the color bit information includes at least one of a packet loss rate and a delay. A second record in the first correspondence indicates that when a first bit in the service indication is set to a special value, for example, 1, it indicates that a light IOAM service needs to be provided, and a processing service corresponding to a service type "light IOAM" does not need to carry parameter information. Meanings of other records in the first correspondence shown in Table 1 are not described one by one. In the foregoing descriptions, when the service indication is represented in a bitmap manner, the bitmap may include four or more bits. This is not specifically limited in this application. In an example, a value of the service indication may be 0101. It is understood based on a high-order bit on the left and a low-order bit (a zero^{th} bit) on the right that the service indication indicates two services, and service types indicated by the two services include IPFPM and security encryption services. In this case, the service identifier further needs to carry a service parameter, and the service parameter is color bit information corresponding to IPFPM. To be specific, the foregoing parameter information is optional. In another example, a value of the service indication may be 1001. It is understood based on a high-order bit on the left and a low-order bit (a zero^{th} bit) on the right that the service indication indicates that a service type corresponding to the service indication includes IPFPM and an SFC. To be specific, the service identifier includes indication information, the indication information indicates first service information and second service information, the first service information includes a first service, and the second service information includes a second service. Optionally, in this case, the service identifier further needs to carry a service parameter set. The service parameter includes color bit information corresponding to IPFPM and metadata required by an SFC service.

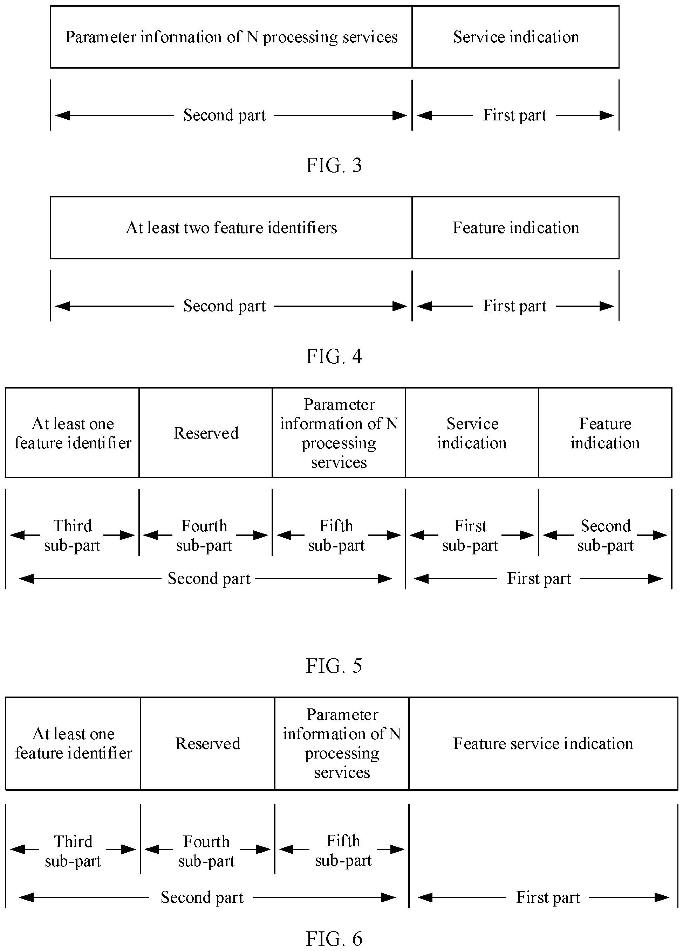

When the service identifier needs to carry a plurality of pieces of parameter information, the first device carries a plurality of parameters in a manner corresponding to a location sequence of the service indication. For details, refer to FIG. 3 below and related descriptions. Details are not described herein.

**Table 1**

| Service indication rule | Service type set | Parameter information |
|---|---|---|
| Zero^{th} bit | IPFPM | Color bit information (packet loss rate and/or delay) |
| First bit | Light IOAM | Null |
| Second bit | Security encryption | Null |
| Third bit | SFC | Metadata |
| ... | ... | ... |

In another example, the first correspondence is an example of a rule correspondence for generating a service indication based on a value. When a form of the service indication is a numeric form, the service indication is a value. For example, for details, refer to a first correspondence shown in Table 2. A difference between the first correspondence shown in Table 2 and the first correspondence shown in Table 1 lies in that a service indication in each record in the first correspondence shown in Table 2 is a value. For example, in a first record in Table 2, when a value of the service indication is 1, the service indication indicates an IPFPM service and indicates that the service indication further needs to carry color bit information. In this case, the first service information and the second service information are the IPFPM service indicated in the service indication and the color bit information carried in the service indication. When a value of the service indication is 5, the service indication indicates IPFPM and light IOAM services, and indicates that a service parameter that needs to be carried includes color bit information. In this case, the first service information and the second service information that are related to the service identifier are the IPFPM and light IOAM services indicated in the service indication, and the service identifier further carries service parameter information. When a value of the service indication is 9, the service indication indicates IPFPM, security encryption, and SFC services. Correspondingly, parameter information further needs to be carried in the service identifier, and includes color bit information and metadata. In this case, the first service information and the second service information that are related to the service identifier are any two of the IPFPM service, the security encryption service, and the SFC service that are indicated in the service indication.

**Table 2**

| Service indication rule | Service type set | Parameter information |
|---|---|---|
| 1 | IPFPM | Color bit information |
| 2 | Light IOAM | Null |
| 3 | Security encryption | Null |
| 4 | SFC | Null |
| 5 | IPFPM+light IOAM | Color bit information |
| 6 | IPFPM+security encryption | Color bit information |
| 7 | IPFPM+SFC | Color bit information |
| 8 | IPFPM+light IOAM+SFC | Color bit information and metadata |
| 9 | IPFPM+security encryption+SFC | Color bit information and metadata |
| 10 | Light IOAM+SFC | Null |
| 11 | Security encryption+SFC | Null |

In the foregoing descriptions, in addition to the service indication, the service identifier generated by the first network device may further include parameter information of N processing services, where N is an integer greater than 0, and at least one processing service indicated by the service indication includes the N processing services.

Optionally, in this step, the first network device further obtains the parameter information of the N processing services. When the first configuration policy includes the parameter information of the N processing services, the first network device obtains the parameter information of the N processing services that is included in the first configuration policy. When the first configuration policy does not include the parameter information of the processing service, for the service type set included in the first configuration policy, if a record that is in the first correspondence and that includes the service type set further stores the parameter information of the N processing services, the first network device further obtains the parameter information of the N processing services from the record.

Optionally, for the service indication and the parameter information of the processing services in the service identifier, a sequence of the parameter information of the processing services in the service identifier corresponds to the service indication, that is, the service indication further indicates the sequence of the parameter information of the processing services.

Refer to FIG. 3. The service identifier includes a first part and a second part. The first part in the service identifier includes the service indication, and the second part in the service identifier carries parameter information (for example, a packet loss rate and/or a delay) of all of the N processing services.

In an example, when the service indication in the first part is 1001 in a bitmap form, the second part in the service identifier includes packet loss rate and/or delay information corresponding to IPFPM, and metadata required by an SFC service. A plurality of pieces of parameter information in the second part may be carried in a same sequence indicated by the service indication. For example, the service indication is 1001, where a high-order bit is on the left, and a low-order bit (a zero^{th} bit) is on the right. In this case, in a manner from right (low-order bit) to left (high-order bit) or from left (high-order bit) to right (low-order bit), the first network device may use the second part shown in FIG. 3 to carry service parameter information, for example, first carry packet loss rate and/or delay information, for example, content of the packet loss rate and/or delay information is a service 1, and then carry metadata information, for example, content of the metadata information is a service 2.

Optionally, the first network device further determines a quantity of bits occupied by each parameter in the service identifier. For example, the metadata is 32 bits, and the packet loss rate and/or delay information are/is a color bit and occupy/occupies 2 bits. Information about the quantity of bits occupied by each parameter in the service identifier may be included in the second configuration policy, or may be a default rule, a rule obtained by the first network device before delivery, or the like.

### Case 2: The service identifier includes the feature indication.

Optionally, the first network device determines the at least two feature identifiers based on the feature type set included in the first configuration policy, where the at least two feature identifiers include a first feature identifier and a second feature identifier. The service identifier generated by the first network device includes the first feature identifier, the second feature identifier, and the feature indication that are obtained by the first network device. That is, when the service identifier includes the feature identifier, the service identifier includes the feature indication, and the feature indication indicates one or more feature types corresponding to one or more feature identifiers.

Optionally, the service identifier may not include the feature indication, but a specific type of the feature identifier is determined according to another rule.

In an example, the first configuration policy includes the feature type set. The first network device obtains a corresponding feature indication from a second correspondence based on the feature type set included in the first configuration policy, where the second correspondence is used to store a correspondence between the feature indication and a generation rule of the feature type set. That is, the second configuration policy may include the second correspondence herein. The feature indication may be represented in a bitmap form or a numeric form.

Any record in the second correspondence includes a feature type set and a generation rule of content in a feature indication corresponding to the feature type set.

For example, for details, refer to a second correspondence shown in Table 3. The second correspondence is an example of a rule correspondence for generating a feature indication based on a bitmap. As shown in Table 3, a first record in the second correspondence indicates that when a zero^{th} bit of the feature indication is set to a special value, for example, 1, it indicates that a feature type needs to be carried in a first packet and includes Path ID. A second record in the second correspondence indicates that when a first bit of the feature indication is set to a special value, for example, 1, it indicates that a feature type needs to be carried in a first packet and includes Flow ID and Seq num. Meanings of other records in the second correspondence shown in Table 3 are not described one by one. In the foregoing descriptions, when the feature indication is represented in a bitmap manner, the bitmap may include three or more bits. This is not specifically limited in this application. In an example, a value of the feature indication may be 011. It is understood based on a high-order bit on the left and a low-order bit (a zero^{th} bit) on the right that the feature indication indicates two features, and feature identifiers corresponding to the two features include Path ID and Flow ID+Seq num. When the service identifier carries the feature indication, the service identifier further needs to carry at least one feature identifier corresponding to the feature indication. That is, when a value of the feature indication is 011, the service identifier further includes Path ID and Flow ID+Seq num.

**Table 3**

| Feature indication | Feature type set |
|---|---|
| Zero^{th} bit | Path ID |
| First bit | Flow ID+Seq num |
| Second bit | App ID |
| ... | ... |

In another example, when a form of the feature indication is a numeric form, the feature indication is a value. For example, for details, refer to a second correspondence shown in Table 4. A difference between the second correspondence shown in Table 4 and the second correspondence shown in Table 3 lies in that a feature indication in each record in the second correspondence shown in Table 4 is a value. For example, when a feature indication in a first record in Table 4 is a value 1, the feature indication indicates a feature identifier Path ID; when a feature indication in a second record is a value 2, the feature indication indicates a feature identifier Flow ID+Seq num; and when the feature indication is a value 4, the feature indication indicates a feature identifier Path ID+App ID.

**Table 4**

| Feature indication | Feature type set |
|---|---|
| 1 | Path ID |
| 2 | Flow ID+Seq num |
| 3 | App ID |
| 4 | Path ID+App ID |
| ... | ... |

Optionally, when the feature type set includes a feature type "Path ID", if the first network device has selected a path when receiving a second packet, the first network device obtains a path identifier of the selected path. If the first network device does not select a path when receiving the second packet, the first network device selects one path from at least one path between the first network device and the tail node, and obtains a path identifier of the selected path, where the at least one feature identifier includes the path identifier of the selected path.

When the feature type set includes a feature type "App ID", the first network device obtains, based on the second packet, an application identifier corresponding to the second packet, where the at least one feature identifier includes the application identifier. When the feature type set includes a feature type Flow ID, the first network device obtains, from the second packet, a traffic identifier of network traffic to which the second packet belongs, where the traffic identifier is 5-tuple information or 4-tuple information of the second packet, and the at least one feature identifier includes the traffic identifier. When the feature type set includes a feature type "Seq num", the first network device obtains a sequence number of the second packet based on the second packet, where the at least one feature identifier includes the sequence number.

A sequence of the feature identifiers in the service identifier corresponds to the feature indication, that is, the feature indication indicates the sequence of the feature identifiers.

Refer to FIG. 4. The service identifier includes a first part and a second part. The first part in the service identifier is the feature indication, and the second part in the service identifier carries the at least two feature identifiers (for example, the traffic identifier and the sequence number of the second packet).

In an example, when the feature indication in the first part is 011 in the foregoing bitmap form, the second part in the service identifier includes two feature identifiers: Path ID and Flow ID+Seq num. These feature identifiers may be carried in a same sequence indicated by the feature indication. For example, the service indication is 011, where a high-order bit is on the left, and a low-order bit (a zero^{th} bit) is on the right. In this case, in a manner from right (low-order bit) to left (high-order bit) or from left (high-order bit) to right (low-order bit), the first network device may use the second part shown in FIG. 3 to carry feature identifiers, for example, first carry Path ID, for example, content of Path ID is an ID 1, and then carry Flow ID+Seq num information, for example, content of the Flow ID+Seq num information is an ID 2.

Optionally, the first network device further determines a quantity of bits occupied by each feature identifier in the service identifier. For example, Path ID is 20 bits, and Flow ID+Seq num occupies 48 bits. Information about the quantity of bits occupied by each feature identifier in the service identifier may be included in the second configuration policy, or may be a default rule, a rule obtained by the first network device before delivery, or the like.

In the following descriptions, a case in which the first service information is used to indicate the first service, and the second service information includes the first feature identifier required for executing the at least one service includes Case 3 or Case 4.

### Case 3: The service identifier includes the service indication and the feature indication.

The first configuration policy includes a service type set and a feature type set. The first network device determines the service identifier based on the service type set and the feature type set that are included in the first configuration policy, where the service identifier includes the service indication and the feature indication.

Optionally, the first network device may obtain parameter information of all of N processing services. In addition to the service indication and the feature indication, the service identifier generated by the first network device may further include parameter information of the N processing services, where at least one processing service indicated by the service indication includes the N processing services.

Optionally, in this step, the first network device further obtains the parameter information of the N processing services. When the first configuration policy includes the parameter information of the N processing services, the first network device obtains the parameter information of the N processing services that is included in the first configuration policy. When the first configuration policy does not include the parameter information of the processing service, for the service type set and the feature type set that are included in the first configuration policy, if a record that is in the second correspondence and that includes the service type set and the feature type set further stores the parameter information of the N processing services, the first network device further obtains the parameter information of the N processing services from the record.

Optionally, for a process of obtaining the parameter information of the processing service, refer to related content in Case 1. Details are not described herein again.

Optionally, the first network device determines at least one feature identifier based on the feature type set included in the first configuration policy. In addition to the service indication and the feature indication, the service identifier generated by the first network device further includes the at least one feature identifier.

For details about obtaining the service indication and the feature indication by the first network device, and detailed information about the related service parameter and the feature identifier, refer to the descriptions in Case 1 and Case 2. Details are not described herein again.

The following focuses on how the service identifier carries the service indication and the feature indication. Optionally, the service identifier further carries the service parameter and the feature identifier. Refer to FIG. 5. The service identifier includes a first part and a second part. The first part includes a first sub-part and a second sub-part, and the second part includes a third sub-part, a fourth sub-part, and a fifth sub-part.

In the service identifier, the first sub-part may be a service indication, and the second sub-part may be a feature indication. In the service identifier, the fifth sub-part may carry parameter information of all of the N processing services, for example, the service 1 and the service 2, and the third sub-part may carry one or more feature identifiers, for example, the ID 1 and the ID 2. Optionally, the service identifier further includes the fourth sub-part, and the fourth sub-part is a reserved part.

In an example, the feature identifier corresponds to a location of the feature indication, and the service parameter information corresponds to a location of the service indication. To be specific, when the feature indication occupies a low-order bit (corresponding to the second sub-part in FIG. 5) of the first part in the service identifier, the feature identifier occupies a low-order bit (corresponding to the fifth sub-part in FIG. 5) of the second part in the service identifier, and when the service indication occupies a low-order bit of the first part in the service identifier, the service parameter information occupies a low-order bit of the second part in the service identifier.

### Case 4: The service identifier includes the feature service indication.

The first configuration policy includes a service type set and a feature type set. The first network device obtains a corresponding feature service indication from a third correspondence based on the service feature set and the feature type set that are included in the first configuration policy, where the third correspondence is used to store a correspondence between the feature service indication, the service type set, the feature type set, and a generation rule of parameter information.

Any record in the third correspondence includes a correspondence between a service type set, a feature type set, and a generation rule of a feature service indication. The service type set includes a service type of each of at least one processing service, and the feature type set includes a feature type of each of at least one feature identifier. The feature service indication indicates the at least one processing service and the at least one feature identifier.

Optionally, if a processing service in the at least one processing service has parameter information, parameter information included in the record is the parameter information of the processing service. When each of the at least one processing service has no parameter information, the parameter information included in the record may indicate null.

For example, for details, refer to a third correspondence shown in Table 5. The third correspondence is an example of a rule correspondence for generating a feature service indication based on a bitmap. A first record in the third correspondence indicates that when a zero^{th} bit in the feature service indication is set to a special value, for example, 1, it indicates that the SR network needs to provide an IPFPM service for the first packet, and needs to use the first packet to carry a feature identifier Path ID, which may be denoted as an ID 1, and service parameter information, that is, color bit information (for example, a packet loss rate and/or a delay), which may be denoted as a service 1. A second record in the third correspondence indicates that when a first bit in the feature service indication is set to a special value, for example, 1, it indicates that the SR network needs to provide a light IOAM service for the first packet, and needs to use the first packet to carry a feature identifier Flow ID+Seq num, where the service does not need to carry parameter information. Meanings of other records in the third correspondence shown in Table 5 are not described one by one.

In an example, a value of the feature service indication determined by the first network device is 0011. It is understood based on a high-order bit on the left and a low-order bit (a zero^{th} bit) on the right that the feature service indication indicates two services, and service types indicated by the two services include IPFPM and security encryption services. In this case, the service identifier further needs to carry a service parameter, and the service parameter is color bit information (for example, packet loss rate and/or delay information) corresponding to IPFPM. In addition, the service identifier further needs to carry Path ID and Flow ID+Seq num.

**Table 5**

| Feature service indication | Service type set | Feature type set | Parameter information |
|---|---|---|---|
| Zero^{th} bit | IPFPM | Path ID | Color bit information |
| First bit | Light IOAM | Flow ID+Seq num | Null |
| Second bit | Security encryption | App ID | Null |
| ... | ... | ... | ... |

When a form of the feature service indication is a numeric form, the feature service indication is a value. For example, for details, refer to a third correspondence shown in Table 6. A difference between the third correspondence shown in Table 6 and the third correspondence shown in Table 5 lies in that a feature service indication in each record in the third correspondence shown in Table 6 is a value. For example, when a feature service indication in a first record in Table 6 is a value 1, it indicates that the SR network needs to provide an IPFPM service for the first packet, and needs to use the first packet to carry a feature identifier Path ID, which may be denoted as an ID 1, and service parameter information, that is, color bit information (for example, a packet loss rate and/or a delay), which may be denoted as a service 1.

**Table 6**

| Feature indication | Service type set | Feature type set | Parameter information |
|---|---|---|---|
| 1 | IPFPM | Path ID | Color bit information |
| 2 | Light IOAM | Flow ID+Seq num | Null |
| 3 | Security encryption | App ID | Null |
| 4 | SFC | Path ID+App ID | Null |
| ... | ... | ... | ... |

Optionally, in the service identifier, a sequence of the parameter information of the processing services corresponds to the feature service indication, that is, the feature service indication further indicates the sequence of the parameter information of the processing services; and a sequence of the feature types in the feature type set corresponds to the feature service indication, that is, the feature service indication further indicates the sequence of the feature types. The first network device selects the first path from the first path and the second path between the first network device and the tail node based on Path ID in the feature type set included in the first configuration policy, and obtains a path identifier Path 1 of the first path. The first network device generates a service identifier, where the service identifier includes a feature service indication "0011", the path identifier Path 1 of the first path, and parameter information "packet loss rate and/or delay".

Optionally, refer to FIG. 6. The service identifier includes a first part and a second part. The second part includes a third sub-part, a fourth sub-part, and a fifth sub-part.

The first part in the service identifier is the feature service indication. In the service identifier, the fifth sub-part carries the parameter information (for example, a packet loss rate and/or a delay) of all of the N processing services, and the third sub-part carries the at least one feature identifier (for example, Path 1). Optionally, the service identifier further includes the fourth sub-part, and the fourth sub-part is a reserved part.

Optionally, in this step, the first network device further obtains the parameter information of the N processing services. When the first configuration policy includes the parameter information of the N processing services, the first network device obtains the parameter information of the N processing services that is included in the first configuration policy. When the first configuration policy does not include the parameter information of the processing service, for the service type set included in the first configuration policy, if a record that is in the third correspondence and that includes the service type set further stores the parameter information of the N processing services, the first network device further obtains the parameter information of the N processing services from the record.

In an example, the feature identifier and the service parameter information occupy locations in the service identifier according to a default rule. For example, the feature identifier occupies a high-order bit (corresponding to the third sub-part in FIG. 6) of the second part in the service identifier, and the service parameter information occupies a low-order bit (corresponding to the fifth sub-part in FIG. 6) of the second part in the service identifier.

In an example, the service identifier is a path segment identifier.

Optionally, a length of the service identifier is 128 bits.

In a specific example, the service indication part and the feature indication part may occupy a total of 16 bits in the 128 bits, and the 16 bits occupy high-order bits or low-order bits in the 128 bits. That is, a length of the first part is 16 bits, a length of the second part is 112 bits, and the first part is located in a high-order bit or a low-order bit in the service identifier.

The foregoing describes an example of a structure and composition of the service identifier. When the service identifier carries a parameter or a feature identifier, the parameter or the feature identifier may be applied to one service, or may be applied to a plurality of services. This is not limited in this application.

S2103: The first network device generates the first packet, where the first packet includes the SRH, and the SRH includes the service identifier.

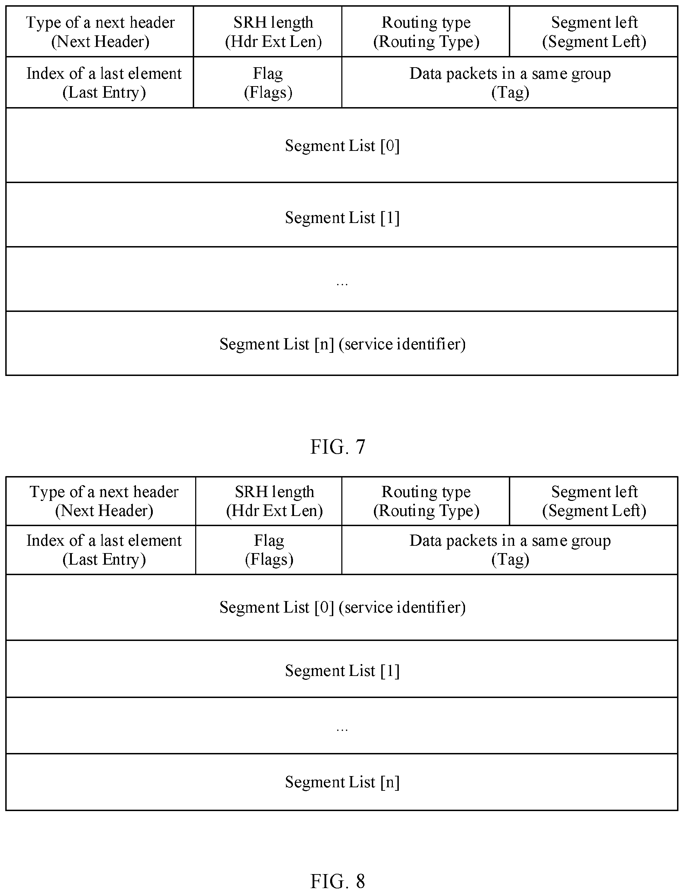

The first network device may add an SRH to the second packet, where the SRH includes the service identifier. Refer to an SRH shown in FIG. 7. The SRH includes information such as a segment identifier list and a flag (Flags). The segment identifier list includes n+1 fields, and the n+1 fields are respectively Segment List [n] to Segment List [0], where n is an integer greater than 1. Optionally, the service identifier is located in the segment identifier list.

Optionally, the segment identifier list includes a service identifier. Because the service identifier includes at least two pieces of information related to one or more services, different TLVs do not need to be set in the SRH to carry information about all service types in the service type set, and different TLVs do not need to carry feature identifiers corresponding to all feature types in the feature type set. In this way, a length of the first packet is reduced. After the first network device sends the first packet, the second network device that receives the first packet does not need to spend a lot of time parsing a TLV in the first packet, to increase efficiency of parsing the first packet and executing a service.

Optionally, refer to FIG. 7. The service identifier is located at the beginning of the segment identifier list, and the beginning of the segment identifier list is a first field in the segment identifier list, that is, the field Segment List [n]. In other words, the service identifier may be carried in the field Segment List [n].

Alternatively, optionally, refer to FIG. 8. The service identifier is located at the end of the segment identifier list, and the end of the segment identifier list is a last field in the segment identifier list, that is, the field Segment List [0]. In other words, the service identifier may be carried in the field Segment List [0].

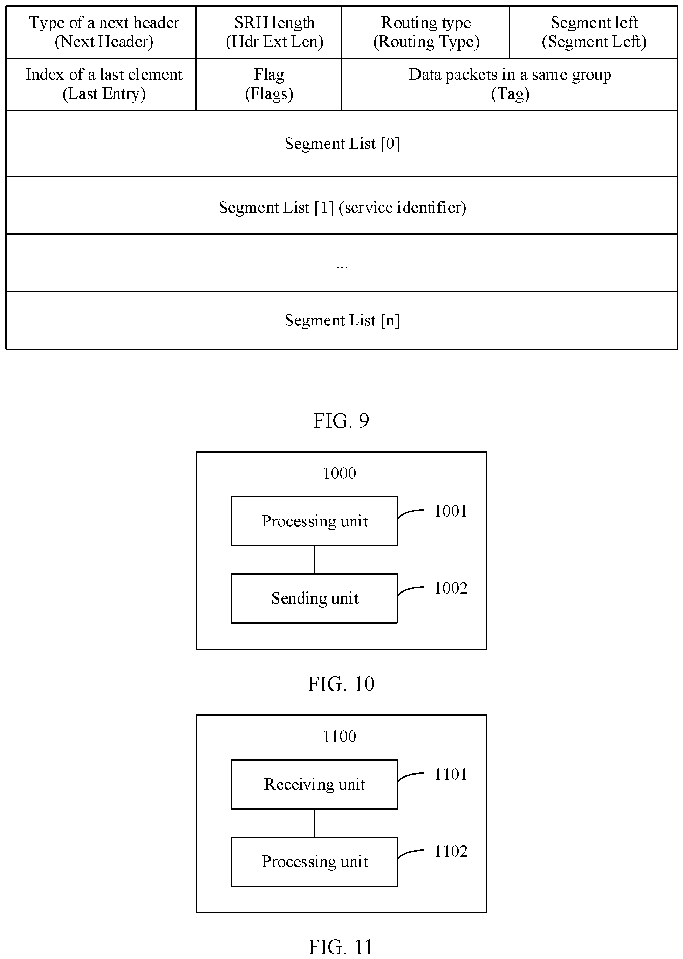

Alternatively, optionally, refer to FIG. 9. The service identifier is located before the end of the segment identifier list and is adjacent to the end of the segment identifier list. A location of the service identifier is a penultimate field in the segment identifier list, that is, the location of the service identifier is the field Segment List [1]. In other words, the service identifier may be carried in the field Segment List [1].

Optionally, the SRH includes at least one TLV, and the service identifier may not be located in the segment identifier list in the SRH, but may be located in one TLV in the SRH. The TLV includes a type field, a length field, and a value field. The type field includes a TLV type used to carry the service identifier, and the value field includes the service identifier.

Because the service identifier includes indication information indicating the service type set and the feature type set, only one TLV needs to include the service identifier. In this way, other different TLVs do not need to be set in the SRH to carry all service types in the service type set, and other different TLVs do not need to carry feature identifiers corresponding to all feature types in the feature type set. In this way, a length of the first packet is reduced. Especially when information about at least two services needs to be carried in the first packet, after the first network device sends the first packet, the second network device that receives the first packet does not need to spend a lot of time parsing a TLV in the first packet, to increase efficiency of parsing the first packet.

Optionally, when the first network device generates the first packet, the SRH further carries a flag. When a value of the flag is set to a special value, for example, 1, it indicates that the first packet carries the service identifier. Optionally, the flag is further used to indicate a location of the service identifier in the SRH.

S202: The first network device sends the first packet.

If the first network device has selected a path in the operation S201, the first network device sends the first packet through the selected path. For example, in the example shown in FIG. 5 or FIG. 6, the first network device sends the first packet through the selected first path.

If the first network device does not select a path in the operation S201, the first network device selects a path from paths between the first network device and the tail node, and sends the first packet through the selected path.

S203: The second network device receives the first packet, and processes the first packet based on the service identifier in the first packet.

The second network device is a node on the selected path, and includes a tail node or an intermediate node.

For the intermediate node, if the controller configures the intermediate node to process a packet, or a service needs to be processed by the intermediate node, the intermediate node receives the first packet, processes the first packet based on an operation in this step, and sends the first packet to the tail node after processing the first packet. If the controller does not configure the intermediate node to process a packet, or no service needs to be processed by the intermediate node, the intermediate node receives the first packet, and may forward the first packet to the tail node. The tail node receives the first packet, and processes the first packet based on an operation in this step.

Optionally, after receiving the packet, the second network device may obtain the service identifier at a determined location.

Optionally, after receiving the first packet, the second network device obtains the service identifier based on a flag of the first packet. In an implementation, the second network device determines, based on the flag of the first packet, whether the first packet includes the service identifier, and obtains the service identifier from the first packet when determining that the first packet includes the service identifier.

When the service identifier is in the segment identifier list of the first packet, the second network device obtains the service identifier from the segment identifier list. For example, the second network device obtains the service identifier from a field located at the beginning of the segment identifier list, or obtains the service identifier from a field located at the end of the segment identifier list, or determines a field that is located before the end of the segment identifier list and that is adjacent to the end of the segment identifier list, and obtains the service identifier from the field.

When the service identifier is located in the TLV in the first packet, the TLV used to carry the service identifier is parsed from the first packet, and the service identifier is obtained from the value field in the TLV

In the foregoing descriptions, the second network device may determine the location of the service identifier by using the flag information, or the service identifier may be carried in the default location.

Information included in the service identifier in the first packet includes the foregoing four cases, and the four cases are Case 1, Case 2, Case 3, and Case 4 described in S201.

Optionally, in Case 1, when the service identifier includes the service indication, in this step, the second network device determines at least two services based on the service indication, and executes the determined at least two services based on the first packet.

Optionally, when the service identifier includes the parameter information of all of the N processing services, the second network device further sequentially obtains the parameter information of all of the N processing services from the service identifier based on the service indication, and processes the first packet based on the at least one processing service and the parameter information of all of the N processing services.

The second network device stores the first correspondence. A detailed implementation in which the second network device obtains the first correspondence is the same as a detailed implementation in which the first network device obtains the first correspondence. Details are not described herein again.

The second network device obtains the service type set from the first correspondence based on the service indication, where the service type set includes a service type of each of the at least one service; and determines each service based on the service type of each service.

Optionally, for the parameter information of all of the N processing services, a sequence of the parameter information of the processing services in the service identifier is the same as a sequence of service types of the processing services in the service type set. Therefore, the parameter information of the processing services is obtained from the service identifier based on the sequence of the service types of the processing services in the service type set.

In some cases, the second network device does not require at least one feature identifier when processing the first packet. For example, it is assumed that a processing service performed by the second network device on the first packet is a processing service corresponding to IPFPM, and there is one path between the head node and the tail node. In this case, the second network device may not require a path identifier, and the second network device processes the first packet based on the processing service corresponding to IPFPM, to obtain a packet loss rate and/or a delay of the first packet, and then sends a path identifier of the path and the packet loss rate and/or the delay of the first packet to the controller or the network management device. Therefore, when the first network device generates the first packet, the service identifier in the first packet may include only the service indication.

For example, it is assumed that there is only one path between the head node and the tail node. Refer to the example shown in FIG. 3. When the service indication is in a bitmap form, the second network device obtains a service indication "0011" from the service identifier, obtains, based on the service indication, a service type set from the first correspondence shown in Table 1, where the service type set includes IPFPM, and determines a processing service corresponding to IPFPM. Alternatively, when the service indication is in a numeric form, the second network device obtains a value 1 from the service identifier, obtains, based on the value 1, a service type set from the first correspondence shown in Table 2, where the service type set includes IPFPM, and determines a processing service corresponding to IPFPM. The second network device obtains parameter information from the service identifier, that is, color bit information, where the color bit information includes a packet loss rate and/or a delay; and processes the first packet based on the processing service corresponding to IPFPM and the service parameter "packet loss rate and/or delay", to obtain a packet loss rate and/or a delay of the first packet, sends the packet loss rate and/or the delay of the first packet, and sends a path identifier of the path.

Optionally, in Case 2, when the service identifier includes the feature indication, the service identifier includes at least two feature identifiers. In this step, the second network device sequentially obtains the at least two feature identifiers from the service identifier based on the feature indication, and executes at least one service based on the at least two feature identifiers and the first packet.

Optionally, an operation that the second network device obtains the at least two feature identifiers may be as follows: The second network device obtains a feature type set based on the feature indication, and sequentially obtains the at least two feature identifiers from the service identifier based on feature types that are of the at least two feature identifiers and that are included in the feature type set.

Optionally, the second network device stores the second correspondence. A manner in which the second network device obtains the second correspondence is the same as a manner in which the first network device obtains the second correspondence. Details are not described herein again.

Optionally, the second network device obtains the feature type set from the second correspondence based on the feature indication.

Because a sequence of all of the at least two feature identifiers in the service identifier is the same as a sequence of feature types of the feature identifiers in the feature type set, the feature identifiers are identified and obtained from the service identifier based on the sequence of the feature types of the feature identifiers.

Optionally, before performing this step, the controller configures, on the second network device, the feature identifier and one or more processing services corresponding to the feature identifier. In an implementation, the controller sends a fourth correspondence to the second network device. For any record in the fourth correspondence, the any record in the correspondence includes a feature identifier and a service type of each of at least one processing service corresponding to the feature identifier, some processing services included in the at least one processing service has parameter information, and the record further includes the parameter information of the some processing services. The second network device receives and stores the fourth correspondence.

Optionally, an operation that the second network device processes the first packet based on the at least one feature identifier may be as follows: The second network device obtains a corresponding service type from the fourth correspondence based on each of the at least one feature identifier, determines a processing service corresponding to the obtained service type, and performs the determined processing service on the first packet based on the at least one feature identifier.

Optionally, if the second network device further obtains parameter information of the corresponding processing service from the fourth correspondence based on each feature identifier, the second network device performs the determined processing service on the first packet based on the at least one feature identifier and the obtained parameter information of the processing service.

For example, refer to the example shown in FIG. 4. When the feature indication is in a bitmap form, the second network device obtains a feature indication "010" from the service identifier, and obtains, based on the feature indication, a feature type set from the second correspondence shown in Table 3, where the feature type set includes Flow ID+Seq num. Alternatively, when the feature indication is in a numeric form, the second network device obtains a value 2 from the service identifier, to learn that the feature indication is the value 2, and obtains, based on the feature indication, a feature type set from the second correspondence shown in Table 4, where the feature type set includes Flow ID+Seq num. The second network device learns, from the service identifier based on the feature type set, that feature identifiers are a traffic identifier and a sequence number of the second packet.

In an example, if a service type obtained from the fourth correspondence based on the traffic identifier of the second packet is security encryption, the second network device processes the first packet based on the traffic identifier and the sequence number of the second packet, and performs security encryption processing on the first packet. Optionally, in Case 3, when the service identifier includes the service indication and the feature indication, the service identifier includes at least one feature identifier, and the service identifier may further include parameter information of all of the N processing services.

In this step, the second network device determines at least one processing service based on the service indication, sequentially obtains the at least one feature identifier from the service identifier based on the feature indication, and processes the first packet based on the at least one processing service and the at least one feature identifier.

For a detailed implementation process in which the second network device determines the at least one processing service and obtains the at least one feature identifier, refer to related content in Case 1 and Case 2. Details are not described herein again.

Optionally, when the service identifier includes the parameter information of all of the N processing services, the second network device further sequentially obtains the parameter information of all of the N processing services from the service identifier based on the service indication, and processes the first packet based on the at least one feature identifier, the at least one processing service, and the parameter information of all of the N processing services.

For a detailed implementation process in which the second network device obtains the parameter information of all of the N processing services, refer to related content in Case 1. Details are not described herein again.

For example, refer to the example shown in FIG. 5. When the service feature and the feature indication are in a bitmap form, the second network device obtains a service indication "0001" and a feature indication "001" that are included in the service identifier of the first packet; obtains, based on the service indication "0001", a corresponding service type set from the first correspondence shown in Table 1, where the service type set includes IPFPM, determines a processing service corresponding to IPFPM, and obtains parameter information, that is, color bit information, from the service identifier, where the color bit information includes a packet loss rate and/or a delay; and obtains, based on the feature indication "001", a corresponding feature type set from the second correspondence shown in Table 3, where the feature type set includes Path ID, and obtains a path identifier Path 1 of the first path from the service identifier based on Path ID.

Alternatively, when the service indication and the feature indication are in a numeric form, the second network device obtains a service indication "value 1" and a feature indication "value 1" that are included in the service identifier of the first packet; obtains, based on the service indication "value 1", a corresponding service type set from the first correspondence shown in Table 2, where the service type set includes IPFPM, determines a processing service corresponding to IPFPM, and obtains parameter information, that is, color bit information, from the service identifier, where the color bit information includes a packet loss rate and/or a delay; and obtains, based on the feature indication "value 1", a corresponding feature type set from the second correspondence shown in Table 4, where the feature type set includes Path ID, and obtains a path identifier Path 1 of the first path from the service identifier based on Path ID. The second network device processes the first packet based on the processing service corresponding to IPFPM, the path identifier Path 1 of the first path, and the service parameter "packet loss rate and/or delay", to obtain a packet loss rate and/or a delay of the first packet, sends the packet loss rate and/or the delay of the first packet, and sends the path identifier Path 1 of the first path. Optionally, the second network device sends, to the controller or the network management device, the packet loss rate and/or the delay of the first packet and the path identifier Path 1 of the first path.

Optionally, in Case 4, when the service identifier includes the feature service indication, the service identifier further includes at least one feature identifier, and the service identifier may further include parameter information of all of the N processing services.

In this step, the second network device determines at least one processing service based on the feature service indication, sequentially obtains the at least one feature identifier from the service identifier, and processes the first packet based on the at least one processing service and the at least one feature identifier.

The second network device stores the third correspondence. A detailed implementation in which the second network device obtains the third correspondence is the same as a detailed implementation in which the first network device obtains the third correspondence. Details are not described herein again.

The second network device obtains a corresponding service type set and a corresponding feature type set from the third correspondence based on the feature service indication, where the service type set includes a service type of each of the at least one processing service, and the feature type set includes a feature type of each of the at least one feature identifier; and determines each processing service based on the service type of each processing service, and sequentially obtains feature identifiers from the service identifier based on the feature type of each feature identifier. Because a sequence of all of the at least one feature identifier in the service identifier is the same as a sequence of feature types of the feature identifiers in the feature type set, the feature identifiers are identified and obtained from the service identifier based on the sequence of the feature types of the feature identifiers.

Optionally, when the service identifier includes the parameter information of all of the N processing services, the second network device further sequentially obtains the parameter information of all of the N processing services from the service identifier based on the service indication, and processes the first packet based on the at least one feature identifier, the at least one processing service, and the parameter information of all of the N processing services.

For a detailed implementation process in which the second network device obtains the parameter information of all of the N processing services, refer to related content in Case 1. Details are not described herein again.

For example, refer to the example shown in FIG. 6. When the feature service indication is generated in a bitmap form, the second network device obtains a feature service indication "0001" included in the service identifier of the first packet; and obtains, based on the feature service indication "0001", a corresponding service type set and a corresponding feature type set from the third correspondence shown in Table 5, where the service type set includes IPFPM, determines a processing service corresponding to IPFPM, obtains parameter information, that is, color bit information, from the service identifier, where the color bit information includes a packet loss rate and/or a delay, and the feature type set includes Path ID, and obtains a path identifier Path 1 of the first path from the service identifier based on Path ID.

Alternatively, when the feature service indication is in a numeric form, the second network device obtains a feature service indication "value 1" included in the service identifier of the first packet; and obtains, based on the feature service indication "value 1", a corresponding service type set and a corresponding feature type set from the third correspondence shown in Table 6, where the service type set includes IPFPM, determines a processing service corresponding to IPFPM, obtains parameter information, that is, color bit information, from the service identifier, where the color bit information includes a packet loss rate and/or a delay, and the feature type set includes Path ID, and obtains a path identifier Path 1 of the first path from the service identifier based on Path ID.

The second network device processes the first packet based on the processing service corresponding to IPFPM, the path identifier Path 1 of the first path, and the service parameter "packet loss rate and/or delay", to obtain a packet loss rate and/or a delay of the first packet, sends the packet loss rate and/or the delay of the first packet, and sends the path identifier Path 1 of the first path. Optionally, the second network device sends, to the controller or the network management device, the packet loss rate and/or the delay of the first packet and the path identifier Path 1 of the first path.

In embodiments of this application, the first network device generates the first packet, where the SRH of the first packet includes the service identifier, and the service identifier includes the service indication, the feature indication, and the feature service indication, or the service identifier includes the service indication and the feature indication. When the service identifier includes the feature indication, the service identifier further includes the feature identifier. Because the service indication indicates the at least one service, the feature indication indicates the at least one feature identifier, and the feature service indication indicates the at least one processing service and the at least one feature identifier, the indication information can indicate the at least one processing service and/or the at least one feature identifier, and the indication information is located in the service identifier. In this way, the first packet does not need to include a TLV corresponding to each processing service and a TLV corresponding to each feature identifier, to reduce a quantity of TLVs in the first packet. When receiving the first packet, the second network device reduces a quantity of to-be-parsed TLVs in the first packet or does not need to parse the TLV in the first packet, to increase forwarding efficiency, reduce a length of the first packet, and save network resources.

Refer to FIG. 10. An embodiment of this application provides a service execution apparatus 1000, applied to the SR network shown in FIG. 1. The apparatus 1000 is deployed in the first network device described in any one of the foregoing method embodiments, and includes:
a processing unit 1001, configured to generate a first packet, where the first packet includes an SRH, the SRH includes a service identifier, and the service identifier is related to first service information and second service information; and
a sending unit 1002, configured to send a first packet to a second network device, where the service identifier indicates the second network device to execute at least one service based on the first service information, the second service information, and the first packet.

Optionally, for a detailed implementation process in which the processing unit 1001 generates the first packet, refer to related content in S201 in the embodiment shown in FIG. 2. Details are not described herein again.

Optionally, the first service information includes a first service, the second service information includes a second service, and the at least one service includes the first service and the second service.

Optionally, the first service information includes a first feature identifier, and the second service information includes a second feature identifier. The first service information and the second service information herein are carried in the service identifier. In addition, the service identifier further includes a feature indication part, and the feature indication part indicates that the service identifier includes the first feature identifier and the second feature identifier. Optionally, the first service information includes the first service, and the second service information includes the first feature identifier. The service identifier includes a service indication indicating the first service, and the service indication may further indicate more services. The service identifier further carries a feature indication indicating the first feature identifier, and the feature indication may further indicate more feature identifiers. Alternatively, the service identifier includes a feature service indication, and the feature service indication may indicate both the first service and the first feature identifier.

Optionally, the service identifier is located in a segment identifier list in the SRH or located in a type-length-value TLV in the SRH.

Optionally, a length of the service identifier is 128 bits.

In this embodiment of this application, the first packet generated by the processing unit includes the service identifier, and the service identifier is related to the first service information and the second service information, that is, the service identifier indicates at least one service and/or at least one feature identifier that are/is to be executed based on the first packet. Therefore, after the sending unit sends the first packet, the second network device executes the at least one service based on the first service information, the second service information, and the first packet. The first packet is an actual service packet, to provide a network service for an actual service. In addition, because the service identifier indicates at least one processing service and/or at least one feature identifier that are/is to be executed based on the first packet, a length of the first packet is reduced, and time required by the second network device to parse the first packet is reduced.

The modules in the apparatus 1000 and the foregoing other operations and/or functions are respectively used to implement the various steps and methods implemented by the first network device in the method embodiments. The foregoing descriptions are merely examples of some functions. For specific details, refer to the foregoing method embodiments. For brevity, details are not described herein again.

Refer to FIG. 11. An embodiment of this application provides a service execution apparatus 1100, applied to the SR network shown in FIG. 1. The apparatus 1100 is deployed in the second network device described in any one of the foregoing embodiments, and includes:
a receiving unit 1101, configured to receive a first packet, where the first packet includes an SRH, the SRH includes a service identifier, and the service identifier includes first service information and second service information; and
a processing unit 1102, configured to execute at least one service based on the first service information, the second service information, and the first packet.

In this embodiment of this application, the receiving unit receives the first packet. Because the first packet includes the service identifier, and the service identifier includes the first service information and the second service information, the processing unit may execute the at least one service based on the first service information, the second service information, and the first packet. The first packet is an actual service packet, and the at least one service is executed based on the service identifier and the first packet, to provide a network service for an actual service. In addition, because the service identifier includes at least two pieces of service information, the first packet needs to include only the service identifier. Therefore, a length of the first packet is reduced, and time required by the second network device to parse the first packet is reduced.

The modules in the apparatus 1100 and the foregoing other operations and/or functions are respectively used to implement the various steps and methods implemented by the second network device in the method embodiments. The foregoing descriptions are merely examples of some functions. For specific details, refer to the foregoing method embodiments. For brevity, details are not described herein again.

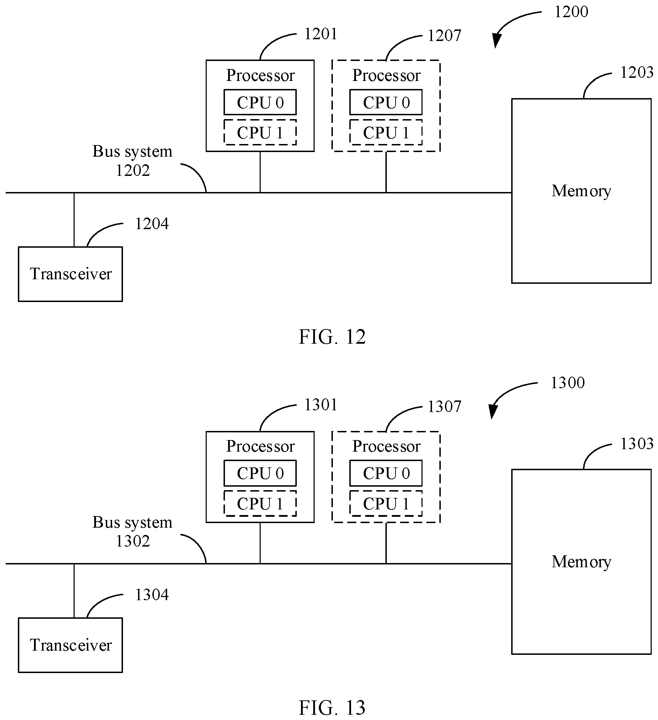

FIG. 12 is a schematic diagram of a service execution apparatus 1200 according to an embodiment of this application. The apparatus 1200 may be the first network device in any one of the foregoing embodiments. The apparatus 1200 includes at least one processor 1201, a bus system 1202, a memory 1203, and at least one transceiver 1204.

The apparatus 1200 is an apparatus of a hardware structure, and may be configured to implement the functional modules in the apparatus 1000 in FIG. 10. For example, a person skilled in the art may figure out that the processing unit 1001 in the apparatus 1000 shown in FIG. 10 may be implemented by the at least one processor 1201 by invoking code in the memory 1203, and the sending unit 1002 in the apparatus 1000 shown in FIG. 10 may be implemented by the transceiver 1204.

Optionally, the processor 1201 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions of this application.

The bus system 1202 may include a path for transmitting information between the foregoing components.

The transceiver 1204 is configured to communicate with another device or a communications network.

The memory 1203 may be a read-only memory (read-only memory, ROM) or another type of static storage device that can store static information and instructions, or a random access memory (random access memory, RAM) or another type of dynamic storage device that can store information and instructions. The memory 1203 may alternatively be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disk, a Blue-ray disc, or the like), a magnetic disk storage medium or another magnetic storage device, or any other medium that can be used to carry or store expected program code in a form of instructions or a data structure and that can be accessed by a computer. However, the memory 1203 is not limited thereto. The memory may exist independently, and is connected to the processor through the bus. The memory may alternatively be integrated with the processor.

The memory 1203 is configured to store application program code for executing the solutions of this application, and the processor 1201 controls the execution. The processor 1201 is configured to execute the application program code stored in the memory 1203, to implement a function in the method in the patent.

In a specific implementation, in an embodiment, the processor 1201 may include one or more CPUs, for example, a CPU 0 and a CPU 1 in FIG. 12.

In a specific implementation, in an embodiment, the apparatus 1200 may include a plurality of processors, for example, the processor 1201 and a processor 1207 in FIG. 12. Each of the processors may be a single-core (single-CPU) processor, or may be a multi-core (multi-CPU) processor. The processor herein may be one or more devices, circuits, and/or processing cores configured to process data (for example, computer program instructions).

FIG. 13 is a schematic diagram of a service execution apparatus 1300 according to an embodiment of this application.

The apparatus 1300 may be the first network device in any one of the foregoing embodiments. The apparatus 1300 includes at least one processor 1301, a bus system 1302, a memory 1303, and at least one transceiver 1304.

The apparatus 1300 is an apparatus of a hardware structure, and may be configured to implement the functional modules in the apparatus 1100 in FIG. 11. For example, a person skilled in the art may figure out that the processing unit 1102 in the apparatus 1100 shown in FIG. 11 may be implemented by the at least one processor 1301 by invoking code in the memory 1303, and the receiving unit 1101 in the apparatus 1101 shown in FIG. 11 may be implemented by the transceiver 1304.

Optionally, the processor 1301 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions of this application.

The bus system 1302 may include a path for transmitting information between the foregoing components.

The transceiver 1304 is configured to communicate with another device or a communications network.

The memory 1303 may be a read-only memory (read-only memory, ROM) or another type of static storage device that can store static information and instructions, or a random access memory (random access memory, RAM) or another type of dynamic storage device that can store information and instructions. The memory 1303 may alternatively be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, the memory 1303 is not limited thereto. The memory may exist independently, and is connected to the processor through the bus. The memory may alternatively be integrated with the processor.

The memory 1303 is configured to store application program code for executing the solutions in this application, and the processor 1301 controls the execution. The processor 1301 is configured to execute the application program code stored in the memory 1303, to implement a function in the method in the patent.

In a specific implementation, in an embodiment, the processor 1301 may include one or more CPUs, for example, a CPU 0 and a CPU 1 in FIG. 13.

In a specific implementation, in an embodiment, the apparatus 1300 may include a plurality of processors, for example, the processor 1301 and a processor 1307 in FIG. 13. Each of the processors may be a single-core (single-CPU) processor, or may be a multi-core (multi-CPU) processor. The processor herein may be one or more devices, circuits, and/or processing cores configured to process data (for example, computer program instructions).

In some possible embodiments, the service execution apparatus (for example, the first network device or the second network device) may be implemented as a virtualized device.

For example, the virtualized device may be a virtual machine (English: Virtual Machine, VM) on which a program having a packet sending function is run, and the virtual machine is deployed on a hardware device (for example, a physical server). The virtual machine is a complete software-simulated computer system that has complete hardware system functions and that runs in a completely isolated environment. For example, the first device may be implemented based on a general-purpose physical server by using a network functions virtualization (Network Functions Virtualization, NFV) technology. The first device is a virtual host, a virtual router, or a virtual switch. After reading this application, a person skilled in the art may virtualize, on the general-purpose physical server by using the NFV technology, the first devices having the foregoing functions. Details are not described herein.

For example, the virtualized device may be a container, and the container is an entity configured to provide an isolated virtualized environment. For example, the container may be a docker container. The container may be configured as the first device. For example, the first device may be created by using a corresponding image. For example, two container instances, that is, a container instance proxy-container 1 and a container instance proxy-container 2, may be created for a proxy-container (a container that provides a proxy service) by using an image of the proxy-container. The container instance proxy-container 1 is provided as the first device or a first computing device, and the container instance proxy-container 2 is provided as the second device or a second computing device. When a container technology is used for implementation, the first device or the second device may run by using a kernel of a physical machine, and a plurality of first devices or a plurality of second devices may share an operating system of the physical machine. Different first devices or second devices may be isolated by using the container technology. A containerized first device or a containerized second device may run in a virtualized environment, for example, may run in a virtual machine, or the containerized first device or the containerized second device may directly run in a physical machine. For example, the virtualized device may be a pod. The pod is a basic unit of Kubernetes (Kubernetes is an open-source container orchestration engine of Google, and is briefly referred to as K8s in English) for deploying, managing, and orchestrating a containerized application. The pod may include one or more containers. All containers in a same pod are usually deployed on a same host. Therefore, all the containers in the same pod may communicate with each other through the host, and may share storage resources and network resources of the host. The pod may be configured as the first device. For example, specifically, a container as a service (English full name: container as a service, CaaS for short, which is a container-based PaaS) may be indicated to create the pod, and the pod is provided as the first device. Certainly, the service execution apparatus may alternatively be another virtualized device. Details are not described herein.

In some possible embodiments, the service execution apparatus may alternatively be implemented by a general-purpose processor. For example, the general-purpose processor may be in a form of a chip. Specifically, the general-purpose processor implementing the service execution apparatus includes a processing circuit, and an input interface and an output interface that are internally connected to and communicate with the processing circuit. The processing circuit is configured to perform, through the input interface, the step of losing a clock packet in the foregoing method embodiments. Optionally, the general-purpose processor may further include a storage medium. The processing circuit is configured to perform the storage step in the foregoing method embodiments through the storage medium. The storage medium may store instructions executed by the processing circuit. The processing circuit is configured to execute the instructions stored in the storage medium, to perform the foregoing method embodiments.

The apparatuses in the product forms have any function of the service execution apparatus in the foregoing method embodiments. Details are not described herein again.

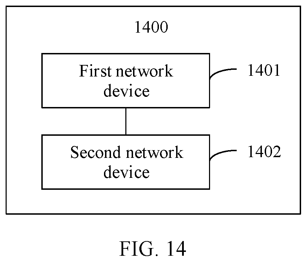

FIG. 14 is a schematic diagram of a network system 1400 according to an embodiment of this application. The system 1400 includes the apparatus 1000 shown in FIG. 10 and the apparatus 1100 shown in FIG. 11. Alternatively, the system 1400 includes the apparatus 1200 shown in FIG. 12 and the apparatus 1300 shown in FIG. 13.

Optionally, the apparatus 1000 shown in FIG. 10 or the apparatus 1200 shown in FIG. 12 may be a first network device 1401, and the apparatus 1100 shown in FIG. 11 or the apparatus 1300 shown in FIG. 13 may be a second network device 1402.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but are not intended to limit this application. Any modification, equivalent replacement, or improvement made without departing from the principle of this application should fall within the protection scope of this application.

## Claims

1. A service execution method, comprising:
generating, by a first network device, a first packet, wherein the first packet comprises a segment routing header SRH, the SRH comprises a service identifier, and the service identifier is related to first service information and second service information; and
sending, by the first network device, the first packet to a second network device, wherein the service identifier indicates the second network device to execute at least one service based on the first service information, the second service information, and the first packet.

2. The method according to claim 1, wherein
the first service information comprises a first service, the second service information comprises a second service, and the at least one service comprises the first service and the second service; or
the first service information comprises a first feature identifier required for executing the at least one service, the second service information comprises a second feature identifier required for executing the at least one service, a feature identifier comprises a traffic identifier or a network identifier, and the feature identifier comprises the first feature identifier and/or the second feature identifier; or
the first service information comprises a first service, the second service information comprises a first feature identifier required for executing the at least one service, the first feature identifier comprises a traffic identifier or a network identifier, and the at least one service comprises the first service.

3. The method according to claim 2, wherein when the first service information comprises the first service, and the second service information comprises the second service, the service identifier comprises a service indication, wherein the service indication indicates the first service and the second service.

4. The method according to claim 3, wherein the service identifier further comprises a service parameter, and the service parameter is related to the first service and/or the second service.

5. The method according to claim 2, wherein when the first service information comprises the first feature identifier required for executing the at least one service, and the second service information comprises the second feature identifier required for executing the at least one service, the service identifier comprises a feature indication, wherein the feature indication indicates that the service identifier comprises the first feature identifier and the second feature identifier.

6. The method according to claim 5, wherein a sequence of the first feature identifier and the second feature identifier corresponds to the feature indication.

7. The method according to claim 2, wherein when the first service information comprises the first service, and the second service information comprises the first feature identifier required for executing the at least one service, the service identifier comprises a service indication and a feature indication, wherein the service indication indicates the first service information, and the feature indication indicates that the service identifier comprises the first feature identifier; or
the service identifier comprises a feature service indication, wherein the feature service indication indicates the first service and indicates that the service identifier comprises the first feature identifier.

8. The method according to claim 7, wherein the service identifier further comprises a service parameter part, and the service parameter part is related to the first service.

9. The method according to claim 4 or 8, wherein a sequence in the service parameter part in the service identifier corresponds to the service indication.

10. The method according to any one of claims 1 to 9, wherein a segment identifier list or a first type-length-value TLV in the SRH of the first packet comprises the service identifier.

11. The method according to any one of claims 1 to 10, wherein a length of the service identifier is 128 bits.

12. The method according to any one of claims 1 to 11, wherein the at least one service comprises one or more of internet protocol flow performance measurement IPFPM, light in-band operation, administration, and maintenance light IOAM, security encryption, a service used to add a timestamp, a service function chain SFC, and a forwarding and access control list ACL.

13. A service execution method, comprising:
receiving, by a second network device, a first packet sent by a first network device, wherein the first packet comprises a segment routing header SRH, the SRH comprises a service identifier, and the service identifier is related to first service information and second service information; and
executing, by the second network device, at least one service based on the first service information, the second service information, and the first packet.

14. The method according to claim 13, wherein
the first service information comprises a first service, the second service information comprises a second service, and the at least one service comprises the first service and the second service; or
the first service information comprises a first feature identifier required for executing the at least one service, the second service information comprises a second feature identifier required for executing the at least one service, a feature identifier comprises a traffic identifier or a network identifier, and the feature identifier comprises the first feature identifier and/or the second feature identifier; or
the first service information comprises a first service, the second service information comprises a first feature identifier required for executing the at least one service, and the first feature identifier comprises a traffic identifier or a network identifier.

15. The method according to claim 14, wherein when the first service information comprises the first service, and the second service information comprises the second service, the service identifier comprises a service indication; and the executing, by the second network device, at least one service based on the first service information, the second service information, and the first packet comprises:
determining, by the second network device, the first service and the second service based on the service indication; and
executing, by the second network device, the first service and the second service based on the first packet.

16. The method according to claim 15, wherein the service identifier further comprises a service parameter, and the service parameter is related to the first service; and the executing, by the second network device, the first service and the second service based on the first packet comprises:
executing, by the second network device, the first service based on the service parameter.

17. The method according to claim 14, wherein when the first service information comprises the first feature identifier required for executing the at least one service, and the second service information comprises the second feature identifier required for executing the at least one service, the service identifier comprises a feature indication, wherein the feature indication indicates that the service identifier comprises the first feature identifier and the second feature identifier; and the executing, by the second network device, at least one service based on the first service information, the second service information, and the first packet comprises:
obtaining, by the second network device, the first feature identifier and the second feature identifier based on the feature indication.

18. The method according to claim 14, wherein when the first service information comprises the first service, and the second service information comprises the first feature identifier required for executing the at least one service,
the service identifier comprises a service indication and a feature indication, wherein the service indication indicates the first service, and the feature indication indicates that the service identifier comprises the first feature identifier; and the executing, by the second network device, at least one service based on the first service information, the second service information, and the first packet comprises:
determining, by the second network device, the first service based on the service indication;
determining, by the second network device, the first feature identifier based on the feature indication; and
executing, by the second network device, the at least one service based on the first packet and the first feature identifier, wherein the at least one service comprises the first service.

19. The method according to claim 14, wherein when the first service information comprises the first service, and the second service information comprises the first feature identifier required for executing the at least one service, the service identifier comprises a feature service indication, wherein the feature service indication indicates the first service and indicates that the service identifier comprises the first feature identifier; and the executing, by the second network device, at least one service based on the first service information, the second service information, and the first packet comprises:
determining, by the second network device, the first service and the first feature identifier based on the feature service indication; and
executing, by the second network device, the at least one service based on the first packet and the first feature identifier, wherein the at least one service comprises the first service.

20. The method according to any one of claims 13 to 19, wherein a segment identifier list or a first type-length-value TLV in the SRH of the first packet comprises the service identifier.

21. A service execution apparatus, comprising:
a processing unit, configured to generate a first packet, wherein the first packet comprises a segment routing header SRH, the SRH comprises a service identifier, and the service identifier is related to first service information and second service information; and
a sending unit, configured to send the first packet to a second device, wherein the service identifier indicates the second device to execute at least one service based on the first service information, the second service information, and the first packet.

22. The apparatus according to claim 21, wherein
the first service information comprises a first service, the second service information comprises a second service, and the at least one service comprises the first service and the second service; or
the first service information comprises a first feature identifier required for executing the at least one service, the second service information comprises a second feature identifier required for executing the at least one service, a feature identifier comprises a traffic identifier or a network identifier, and the feature identifier comprises the first feature identifier and/or the second feature identifier; or
the first service information comprises a first service, the second service information comprises a first feature identifier required for executing the at least one service, the first feature identifier comprises a traffic identifier or a network identifier, and the at least one service comprises the first service.

23. The apparatus according to claim 22, wherein when the first service information comprises the first service, and the second service information comprises the second service, the service identifier comprises a service indication, wherein the service indication indicates the first service and the second service.

24. The apparatus according to claim 22, wherein when the first service information comprises the first feature identifier required for executing the at least one service, and the second service information comprises the second feature identifier required for executing the at least one service, the service identifier comprises a feature indication, wherein the feature indication indicates that the service identifier comprises the first feature identifier and the second feature identifier.

25. The apparatus according to claim 22, wherein when the first service information comprises the first service, and the second service information comprises the first feature identifier required for executing the at least one service,
the service identifier comprises a service indication and a feature indication, wherein the service indication indicates the first service, and the feature indication indicates that the service identifier comprises the first feature identifier; or
the service identifier comprises a feature service indication, wherein the feature service indication indicates the first service and indicates that the service identifier comprises the first feature identifier.

26. The apparatus according to any one of claims 21 to 25, wherein a segment identifier list or a first type-length-value TLV in the SRH of the first packet comprises the service identifier.

27. A service execution apparatus, comprising:
a receiving unit, configured to receive a first packet sent by a first device, wherein the first packet comprises a segment routing header SRH, the SRH comprises a service identifier, and the service identifier is related to first service information and second service information; and
a processing unit, configured to execute at least one service based on the first service information, the second service information, and the first packet.

28. The apparatus according to claim 27, wherein
the first service information comprises a first service, the second service information comprises a second service, and the at least one service comprises the first service and the second service; or
the first service information comprises a first feature identifier required for executing the at least one service, the second service information comprises a second feature identifier required for executing the at least one service, a feature identifier comprises a traffic identifier or a network identifier, and the feature identifier comprises the first feature identifier and/or the second feature identifier; or
the first service information comprises a first service, the second service information comprises a first feature identifier required for executing the at least one service, and the first feature identifier comprises a traffic identifier or a network identifier.

29. The apparatus according to claim 28, wherein when the first service information comprises the first service, and the second service information comprises the second service, the service identifier comprises a service indication;
the processing unit is configured to determine the first service and the second service based on the service indication; and
the processing unit is further configured to execute the first service and the second service based on the first packet.

30. The apparatus according to claim 29, wherein the service identifier further comprises a service parameter, and the service parameter is related to the first service; and
the processing unit is configured to execute the first service based on the service parameter.

31. The apparatus according to claim 28, wherein when the first service information comprises the first feature identifier required for executing the at least one service, and the second service information comprises the second feature identifier required for executing the at least one service, the service identifier comprises a feature indication, wherein the feature indication indicates that the service identifier comprises the first feature identifier and the second feature identifier;
the processing unit is configured to obtain the first feature identifier and the second feature identifier based on the feature indication; and
the processing unit is further configured to execute the at least one service based on the first feature identifier, the second feature identifier, and the first packet.

32. The apparatus according to claim 28, wherein when the first service information indicates the first service, and the second service information comprises the first feature identifier required for executing the at least one service, the service identifier comprises a service indication and a feature indication, wherein the service indication indicates the first service, and the feature indication indicates that the service identifier comprises the first feature identifier;
the processing unit is configured to determine the first service based on the service indication;
the processing unit is configured to determine the first feature identifier based on the feature indication; and
the processing unit is further configured to execute the at least one service based on the first packet and the first feature identifier, wherein the at least one service comprises the first service.

33. The apparatus according to claim 28, wherein when the first service information comprises the first service, and the second service information comprises the first feature identifier required for executing the at least one service, the service identifier comprises a feature service indication, wherein the feature service indication indicates the first service and indicates that the service identifier comprises the first feature identifier;
the processing unit is configured to determine the first service and the first feature identifier based on the feature service indication; and
the processing unit is further configured to execute the at least one service based on the first packet and the first feature identifier, wherein the at least one service comprises the first service.

34. The apparatus according to any one of claims 27 to 33, wherein a segment identifier list or a first type-length-value TLV in the SRH of the first packet comprises the service identifier.

35. A network system, comprising a first network device and a second network device, wherein the first network device is the apparatus according to any one of claims 21 to 26, and the second network device is the apparatus according to any one of claims 27 to 34.

36. A computer-readable storage medium, wherein the computer-readable storage medium stores a computer program; and when the computer program is executed by a computer, the method according to any one of claims 1 to 20 is implemented.

37. A computer program product, comprising a computer program, wherein when the computer program is executed by a computer, the method according to any one of claims 1 to 20 is implemented.
